# EUROPÄISCHE PATENTSCHRIFT

(11) **EP 3 047 488 B1**
(45) Veröffentlichungstag und Bekanntmachung des Hinweises auf die Patenterteilung: **07.03.2018**
(21) Anmeldenummer: 14771840.7
(22) Anmeldetag: 17.09.2014
(51) Int. Cl.: G21B 3/00

(54) **ENERGIEERZEUGUNGSVORRICHTUNG UND ENERGIEERZEUGUNGSVERFAHREN SOWIE STEUERUNGSANORDNUNG UND REAKTIONSBEHÄLTER HIERFÜR**
ENERGY GENERATING DEVICE AND ENERGY GENERATING METHOD AND CONTROL ARRANGEMENT AND REACTOR VESSEL THEREFOR
DISPOSITIF GÉNÉRATEUR D'ÉNERGIE ET PROCÉDÉ DE GÉNÉRATION D'ÉNERGIE ET ENSEMBLE DE COMMANDE ET CONTÉNEUR DE RÉACTION ASSOCIÉ

(30) Priorität: 17.09.2013 DE 102013110249
(43) Veröffentlichungstag der Anmeldung: 27.07.2016
(73) Patentinhaber: Airbus Defence and Space GmbH, 82024 Taufkirchen (DE); Airbus Operations GmbH, 21129 Hamburg (DE)
(72) Erfinder: KOTZIAS, Bernhard, 28717 Bremen (DE); SCHLIWA, Ralf, 21739 Dollern (DE); VAN TOOR, Jan, 81739 München (DE)
(74) Vertreter: Kastel, Stefan
(86) Internationale Anmeldenummer: PCT/EP2014/069828
(87) Internationale Veröffentlichungsnummer: WO 2015/040077

(56) Entgegenhaltungen:
- WO-A1-01/29844
- WO-A1-97/20318
- WO-A1-97/20320
- WO-A1-2010/058288
- US-A1- 2012 008 728
- celani et al.: "Experimental results on sub-micro structured Cu-Ni alloys under high temperatures Hydrogen/Deuterium interactions.", X International Workshop on Anomalies in Hydrogen Loaded Metals. , 14 April 2012 (2012-04-14), pages 1-53, Retrieved from the Internet: URL:http://www.22passi.it/downloads/X-Work sISCMNS_2012H4Pres.pdf [retrieved on 2017-06-19]

## Beschreibung

Die Erfindung betrifft eine Energieerzeugungsvorrichtung und ein Energieerzeugungsverfahren zur Energieerzeugung. Weiter betrifft die Erfindung eine Steuerungsanordnung und einen Reaktionsbehälter für eine solche Energieerzeugungsvorrichtung.

Insbesondere betrifft die Erfindung eine Energieerzeugungsvorrichtung mit einem Reaktionsbehälter oder einer Zelle zum Erzeugen von Wärmeenergie durch eine exotherme Reaktion. Als exotherme Reaktion wird insbesondere ein Quantenkondensat auf einem metallgitterunterstützten elektrodynamischen Prozess mit Wasserstoff durchgeführt. Die Beteiligung der schwachen und starken Wechselwirkung wird nicht ausgeschlossen. Vorzugsweise wird als exotherme Reaktion eine LENR durchgeführt, diese steht für "low energy nuclear reaction". Dieser Name ist historisch begründet, im Endeffekt, werden niederenergetische Reaktionsprodukte durch eine Fusion von Nukleonen erzeugt.

Neueste Forschungen zeigen, dass mit Unterstützung von Metallgittern Wasserstoff, darunter werden alle Isotope des Wasserstoffs einschließlich leichtem Wasserstoff, Deuterium und Tritium verstanden, unter Einwirkung von Stößen und Resonanzeffekten zur Energieerzeugung genutzt werden kann.

Reaktionsmaterialien zur Durchführung solcher metallgitterunterstützten elektrodynamischen Kondensations-Prozesse, wie z.B. LENR-Materialien, sind bereits bekannt und werden von einer Reihe von Firmen verwirklicht, insbesondere der Leonardo Corporation - siehe hierzu die WO 2009/125444 A1 - oder die Firmen Defkalion Green Technology, Brillouin Energy oder Bolotov. Andere, wie z.B. in den unten wiedergegebenen Literaturstellen [8, [9], [10] ausgeführt, führen Zusammensetzungen von Übergangsmetallen und Halbmetallen ein.

Unter LENR+ werden LENR-Prozesse verstanden, die unter Verwendung speziell hierzu entworfener Nanopartikel ablaufen.

In http://www.heise.de/tp/artikel/36/36635/1html: Kalte Fusion als Game Changer, Haiko Lietz, 23.03.2012, Teil 11 werden Themen öffentlicher Diskussionen zur LENR zusammengestellt.

In der JP 2004-85519 A werden ein Verfahren und eine Vorrichtung zur Erzeugung großer Energiemengen und von Helium mittels nuklearer Fusion unter Verwendung von hochdichtem Deuterium in Nanopartikeln offenbart.

In der WO 95/15563 werden ein Verfahren und eine Vorrichtung zum Erzeugen von Neutronen aus Festkörpern, die Protonen leiten, offenbart. Eine hohe Neutronenstrahlung wird angestrebt. Die bekannte Vorrichtung weist ein System zur Temperatursteuerung auf.

Auch in der WO 91/02360 werden ein Verfahren und eine Vorrichtung vorgeschlagen, wo neben Wärme auch Strahlung aus einem elektrochemischen nuklearen Prozess erzeugt werden soll.

Auch in der WO 97/20318 werden ein Verfahren und eine Vorrichtung vorgeschlagen, wo Hitze durch die Absorption von Wasserstoff in einem Bimetall-Gitter wird generiert.

In der US 2012/0008728 A1 wird vorgeschlagen, eine Resonanz-Hochfrequenz-Hochspannungsquelle zur effizienten Energieversorgung einer Fusions-Röhre zu verwenden, die D, T oder He3-Dampf enthält.

In der US 2011/0122984 A1 wird eine praktische Technik zum Induzieren und Steuern einer Fusion von Kernen in einem Festkörpergitter beschrieben. Es wird eine Steuerung zum Starten und Stoppen einer Phononenenergiestimulation und eines Beladens des Gitters mit leichten Kernen vorgeschlagen, damit sich durch die Fusionsreaktionen freigelegte Energie verteilen kann, bevor sie einen Punkt erreichen kann, in dem das Reaktionsgitter zerstört wird.

Aus der WO 2010/096080 A1 ist eine Nuklearenergiequelle bekannt, die eine aktive Schicht von Pd-Körnungen, eine elektrische Versorgung, einen thermoelektrischen Umwandler und einen Wärmekollektor umfasst.

In der WO 01/29844 A1 sind ein Verfahren und eine Vorrichtung zur Erzeugung thermischer Energie unter Einsatz nuklearer Wasserstoffprozesse in einem Metallgitter beschrieben. Es wird eine Steuerung offenbart, die Energie zum Erzeugen von Feldern zur Stabilisierung der Prozesse liefert. Die Steuerung steuert die Prozesse in Abhängigkeit von der Temperatur, um die Temperatur in einem Reaktor konstant zu halten. Auch wird ein thermoelektrischer Generator offenbart, der Wärmeenergie aus dem Reaktonsraum in elektrische Energie umwandelt und in einem Elektroenergiespeicher wie z.B. einer Pufferbatterie speichert. Die Steuerung wird durch den Generator und den Elektroenergiespeicher gespeist. Zum Initiieren und Steuern der nuklearen Reaktion ist die Steuerung an Ausgangsanschlüsse des Elektroenergiespeichers angeschlossen. Die Steuerung dient zum Regulieren der erzeugten thermischen Energie durch Steuern der Stärke oder der Frequenz von stimulierenden Strompulsen, um eine zu hohe Temperatur zu verhindern, die zur Zerstörung der Vorrichtung durch Schmelzen führen würde.

Für die Erläuterung der Erfindung und deren vorteilhafter Ausgestaltungen wird insbesondere auf die folgenden Literaturstellen Bezug genommen:
[1] WO 2013/076378 A2
[2] N. Pazos-Perez et al.: Organized Plasmonic Clusters with High Coordination Number and Extraordinary Enhancement in Surface-Enhance Raman Scattering (SERS), Wiley, Angewandte Chemie, Int. Ed. 2012, 51, 12688-12693
[3] Maria Eugenia Toimil Molares: Characterization and properties of micro- and nanowires of controlled size, composition, and geometry fabricated by electrode-position and ion-track technology, Beilstein Journal of Nanotechnology, 2012, 3, 860-883, published 17 December 2012.
[4] US 8 227 020 B1
[5] F. Olofson, L. Holmlid: Detection of MeV particles from ultra-dense protium p(-1): Laser-initiated self-compression from p(1); nuclear Instruments and Methods in Physics Research B 278 (2012) 34-41
[6] Nuclear processes in solids: basic 2nd order processes. P.Kalman T.Keszthelyi, Universtiy of Technology and Economics, Budapest
[7] Resonance like processes in solid 3rd and 4th order processes,. P.Kalman T.Keszthelyi, Universtiy of Technology and Economics, Budapest.
[8] Program on Technology Innovatin: Assessment of Novel Energy Production Mechanisms in a Nanoscale Metal Lattice, Principle Investigator B.Ahern, Electric Power Research Institute Report 2012, USA,
[9] Cold Fusion Nuclear Reactions, Horace Heffner, 2009
[10] life at the center of the energy crisis, G.H.Miley, World Scientific, 2013

Bevorzugte Ausgestaltungen der Erfindung zielen darauf ab, einen autonomen - d.h. insbesondere tragbaren, kompakten - Generator zur Energieversorgung zu schaffen, der für unterschiedliche Anwendungen verwendet werden kann. Insbesondere sind Anwendungen im Automobilbau und Fahrzeugbau, in der Luftfahrzeugindustrie, der Schifffahrtsindustrie und für die Raumfahrt gedacht.

Es sind bereits seit längerem unterschiedliche Wärmeenergiequellen für derartige Bereiche im Einsatz. Z.B. sind konventionelle Zellen zur Energieversorgung Vortriebsmaschinen, wie z.B. Turbinen oder Kolbenmaschinen, die auf chemischen Verbrennungs- oder Oxidationsprozessen unter Verwendung von fossilen oder synthetischen Brennstoffen basieren. Es gibt ein großes Bedürfnis, die derzeit eingesetzten Wärmeenergiequellen zu ersetzen, da sie eine Reihe von Nachteilen bieten.

Insbesondere soll mit der Erfindung eine Wärmequelle zur Ersetzung der bekannten Wärmeenergieerzeuger für den Transportsektor, z.B. im Automobilbau, Schiffbau, Luftfahrzeugbau, für Raumfahrtmissionen, aber auch für Forschungs- und Erprobungszwecke und Expeditionen und für Feldanwendungen oder militärische Anwendungen mit mobilen Einheiten geschaffen werden.

Wärmequellen, die die Verwendung fossiler Brennstoffe vermeiden, sind bereits für Raumfahrtmissionen oder Unterseeboote im Einsatz, diese verwenden aber seit langem bekannte übliche Technologie, d.h. insbesondere die nuklear radioaktive Hitzequellen, beispielsweise basierend auf Uranspaltung oder einfach unter Nutzung von Plutoniumzerfall.

Eine neue Technologie, die die vorteilhaften Merkmale der konventionellen Technologie in Bezug auf Zuverlässigkeit und autonomen Betrieb, jedoch in Verbindung mit einem abfallfreien Betrieb und einem Betrieb frei von radioaktiver Strahlung bereitstellen und dies auch noch zu wettbewerbsfähigen Kosten, wird ein überaus hohes Potential für industrielle Anwendungen, insbesondere im Transportsektor, bereitstellen.

Bisher bekannte Zellen unter Verwendung von exothermen Reaktionen haben den Nachteil, dass sie nicht autark bzw. nicht sich selbst erhaltend sind, wobei das Risiko exothermaler Instabilitäten eine Steuerung sowie eine externe Versorgung zum Betrieb benötigt.

Folgende Kriterien sollte eine exotherme Energiequelle für den Transportsektor wie Fahrzeugbau, Luft- und Raumfahrt, erfüllen:
1. Die Energiequelle sollte umweltfreundlich und nachhaltig sein, d.h. Energie im Gegensatz zur konventionellen Energieproduktion auf Kohlenstoffbasis ohne Erzeugung von Treibhausgasen und weiter ohne Strahlung und ohne Abfall, insbesondere ohne radioaktiven Abfall, erzeugen. Sie sollte auch im Hinblick auf sekundäre Energieträger kohlenstofffrei arbeiten, wie z.B. durch Wind- oder Sonnenenergie produzierte Energieträger oder Brennstoffe.
2. Die Energiequelle sollte in der Leistung vom Bereich von wenigen Watt bis zu Megawatt als Nennleistung ausgelegt werden können.
3. Die Energiequelle sollte in kleine Einheiten integrierbar sein, wie z.B. in Kraftfahrzeuge oder Luft- und Raumfahrzeuge.
4. Sie sollte leichtgewichtig hinsichtlich der zu leistenden Arbeit sein. Wünschenswert wäre ein Wert kleiner als 10 MWh/kg.
5. Sie sollte leichtgewichtig im Hinblick auf die zur Verfügung gestellte Leistung sein. Wünschenswert wäre ein Wert kleiner 1 kW/kg.
6. Sie sollte ohne Notwendigkeit einer Nachladung oder Nachtankung für eine längere Zeit kontinuierlich arbeiten. Wünschenswert wäre ein Betriebsdauer von mehr als 1 Monat ohne Nachladung oder Nachbetankung.
7. Sie sollte autark bzw. sich selbst erhaltend sein, d.h. einen Betrieb ohne die Notwendigkeit, externe Energie oder Leistung hinzuzufügen, gewährleisten.
8. Sie sollte in erheblichem Maße zuverlässig arbeiten.
9. Es wäre wünschenswert, dass eine einmal konstruierte Zelle ohne Nachladen oder Nachtanken arbeitet und nach ihrer Lebenszeit im Sinne einer nachhaltigen Bewirtschaftung recyclebar ist.

Die derzeit nächste Lösung, die die meisten der oben aufgeführten Punkte erfüllt, sind die sogenannten "RTG (Englisch für radioactive thermo generator, also radioaktive Thermogeneratoren), die Plutonium als Brennstoffmaterial bzw. Energieträger verwenden. Eine solche Lösung radioaktiver Thermogeneratoren sollte jedoch nicht in Betracht gezogen werden, da sie den wichtigen Punkt 1 nicht erfüllt.

Die Erfindung schlägt daher verbesserte metallgittergestützte elektrodynamische Kondensationsprozesse unter Verwendung von Wasserstoff, insbesondere Verbesserungen zu dem gitterunterstützten kollektiven Wasserstoffprozess (LENR oder LANR) vor, wobei unter "Wasserstoff" sowohl leichter als auch schwerer Wasserstoff verstanden werden kann.

Gitterunterstützte Reaktionen sind bereits bekannt. Insbesondere LENR (low energy nuclear reaction) ist als Beispiel zu erwähnen. Diese Art von Reaktion erzeugt bei korrektem Ablauf weder radioaktiven Müll noch gefährliche Strahlung und kann bezüglich der Energiezelle oder Energiequelle die Punkte 1 und 4 bis 6 erfüllen kann. Die Ziele 2 bis 6 können durch entsprechende Auslegungen aufgrund des üblichen Fachwissens eines Ingenieurs unter Verwendung der inherenten Fähigkeiten eines LENR-Systems erreicht werden.

Der Erfindung liegt die Aufgabe zugrunde, eine Vorrichtung und ein Verfahren zur Energieerzeugung zu schaffen, mit welchen möglichst viele der oben genannten Kriterien 1 bis 9 erreichbar sind.

Hierfür wird gemäß der Erfindung eine Energieerzeugungsvorrichtung mit den Merkmalen des Anspruches 1 sowie ein Energieerzeugungsverfahren mit den Schritten des weiteren unabhängigen Anspruches vorgeschlagen. Weiter werden eine Steuerungsanordnung und ein Reaktionsbehälter für eine solche Energieerzeugungsvorrichtung bzw. zum Unterstützen eines solchen Energieerzeugungsverfahrens vorgeschlagen.

Vorteilhafte Ausgestaltungen sind Gegenstand der Unteransprüche.

Gemäß einem Aspekt schafft die Erfindung eine Energieerzeugungsvorrichtung zur Erzeugung von Wärmeenergie durch eine exotherme Reaktion in Form eines metallgitterunterstützten Wasserstoffprozesses, umfassend:
einen Reaktionsbehälter mit einem Reaktionsmaterial zur Durchführung der exothermen Reaktion enthaltenden Reaktionsraum,
eine Felderzeugungseinrichtung zur Erzeugung eines Feldes in dem Reaktionsraum zum Aktivieren und/oder Aufrechterhalten der exothermen Reaktion, eine Wärmeübertragungseinrichtung zur Übertragung von Wärme in den und/oder aus dem Reaktionsraum, und
eine Steuerung, die dazu ausgebildet ist, die Felderzeugungseinrichtung abhängig von der Temperatur in dem Reaktionsraum zur Stabilisierung der exothermen Reaktion anzusteuern, dadurch gekennzeichnet, dass zur alleinigen Energieversorgung der Steuerung ein thermoelektrischer Generator, der dazu ausgebildet ist, Wärmeenergie aus dem Reaktionsraum in elektrische Energie umzuwandeln, an die Steuerung angeschlossen ist, um die Steuerung mittels der Wärme des Reaktionsraums derart zu betreiben, dass die Steuerung nur dann, wenn die Temperatur in dem Reaktionsraum oberhalb einer vorgegebenen kritischen Temperatur liegt, mit ausreichend Energie versorgt wird, um die Felderzeugungseinrichtung zur Erzeugung des die Reaktion erzeugenden oder aufrechterhaltenden Feldes anzusteuern.

Gemäß einem weiteren Aspekt schafft die Erfindung eine Steueranordnung für eine derartige Energieerzeugungsvorrichtung, wobei die Steueranordnung umfasst:
eine Felderzeugungseinrichtung zur Erzeugung eines Feldes in einem Reaktionsraum zum Aktivieren und/oder Aufrechterhalten der exothermen Reaktion, und
eine Steuerung, die dazu ausgebildet ist, die Felderzeugungseinrichtung abhängig von einer Temperatur in dem Reaktionsraum zur Stabilisierung der exothermen Reaktion anzusteuern, wobei zur alleinigen Energieversorgung der Steuerung ein thermoelektrischer Generator, der dazu ausgebildet ist, Wärmeenergie aus dem Reaktionsraum in elektrische Energie umzuwandeln, an die Steuerung angeschlossen ist, um die Steuerung mittels der Wärme des Reaktionsraums derart zu betreiben, dass die Steuerung nur bei Vorliegen einer Betriebstemperatur oberhalb einer vorgegebenen kritischen Temperatur mit ausreichend Energie versorgt wird, um die Felderzeugungseinrichtung zur Erzeugung des die Reaktion erzeugenden oder aufrechterhaltenden Feldes anzusteuern.

Gemäß noch einem weiteren Aspekt schafft die Erfindung einen Reaktionsbehälter für eine derartige Energieerzeugungsvorrichtung zur Erzeugung von Wärmeenergie durch eine exotherme Reaktion in Form eines metallgitterunterstützten Wasserstoffprozesses, wobei der Reaktionsbehälter umfasst:
einen Reaktionsraum, der mit einem Reaktionsmaterial zur Durchführung der exothermen Reaktion befüllbar ist, und eine Wärmeübertragungseinrichtung zur Übertragung von Wärme in den und/oder aus dem Reaktionsraum, wobei die Wärmeübertragungseinrichtung ein Rohrsystem mit mehreren, in den Reaktionsraum geführten und/oder den Reaktionsraum durchlaufenden Rohren für ein Wärmeübertragungsfluid aufweist.

Die Energieerzeugungsvorrichtung und insbesondere deren Steuerung oder Steueranordnung sind also so ausgebildet, dass die Felderzeugungseinrichtung kein die Reaktion erzeugendes oder aufrechterhaltendes Feld erzeugt, wenn die Temperatur in dem Reaktionsraum nicht oberhalb der vorbestimmten kritischen Temperatur liegt.

Die Steuerung ist zur alleinigen Energieversorgung derart an einen thermoelektrischen Generator zur Umwandlung von Wärme aus dem Reaktionsraum in elektrische Energie angeschlossen, dass nur dann genügend Energie zur Erzeugung des Feldes zur Verfügung steht, wenn die Temperatur oberhalb eines kritischen Bereichs, z.B. 500°K liegt.

Vorzugsweise ist die "kritische Temperatur" eine Temperatur, unterhalb der schädliche Strahlungen entstehen oder entstehen können.

Bevorzugt schafft die Erfindung eine Energieerzeugungsvorrichtung zur Erzeugung von Wärmeenergie durch eine exotherme Reaktion in Form einer LENR durch Nutzung eines metallgitterunterstützten Wasserstoffprozesses, umfassend: einen Reaktionsbehälter mit einem reaktives LENR-Material zur Durchführung der exothermen Reaktion enthaltenden Reaktionsraum, eine Felderzeugungseinrichtung zur Erzeugung eines Feldes in dem Reaktionsraum zum Aktivieren und/oder Aufrechterhalten der exothermen Reaktion, eine Wärmeübertragungseinrichtung zur Übertragung von Wärme in den und/oder aus dem Reaktionsraum. Vorzugsweise umfasst die Energieerzeugungsvorrichtung weiter:
eine Betriebsparametererfassungseinrichtung zur Erfassung wenigstens eines Betriebsparameters in dem Reaktionsraum, und eine Steuerung, die dazu ausgebildet ist, die Felderzeugungseinrichtung und/oder die Wärmeübertragungseinrichtung in Abhängigkeit von dem erfassten Betriebsparameter zur Stabilisierung der exothermen Reaktion zu steuern oder zu regeln.

Es ist bevorzugt, dass die Betriebsparametererfassungseinrichtung zur Erfassung einer Temperatur in dem Reaktionsraum als Betriebsparameter ausgebildet ist und/oder mit einem Temperatursensor zur Erfassung der Temperatur in dem Reaktionsraum versehen ist.

Es ist bevorzugt, dass zur alleinigen Energieversorgung der Steuerung ein thermoelektrischer Generator, der dazu ausgebildet ist, Wärmeenergie aus dem Reaktionsraum in elektrische Energie umzuwandeln, an die Steuerung angeschlossen ist und/oder dass die Steuerung mittels der Wärme aus dem Reaktionsraum betrieben wird.

Es ist bevorzugt, dass die Steuerung dazu ausgebildet ist, die elektrische Energie des thermoelektrischen Generators als Regelgröße zu regeln.

Es ist bevorzugt, dass die Felderzeugungseinrichtung dazu ausgebildet ist, ein elektromagnetisches Feld zur Anregung und Aufrechterhaltung der exothermen Reaktion wie z.B. einer LENR in dem Reaktionsraum zu erzeugen.

Es ist bevorzugt, dass die Steuerung derart ausgebildet ist, dass die Felderzeugungseinrichtung kein die Reaktion erzeugendes oder aufrechterhaltendes Feld erzeugt, wenn die Temperatur in dem Reaktionsraum nicht oberhalb einer vorbestimmten kritischen Temperatur oder nicht in einem vorbestimmten Betriebstemperaturbereich liegt.

Es ist bevorzugt, dass das Reaktionsmaterial ein LENR-Material ein LENR+-Material ist, das ein Brennstoffmaterial mit speziell gebildeten Micro- und/oder Nanopartikeln zum Katalysieren eines oder zur Reaktion in einem LENR+-Prozess enthält und/oder dass der Reaktionsraum trocken mit LENR-Material enthaltend Nanopartikel und Wasserstoff befüllt ist.

Es ist bevorzugt, dass das Reaktionsmaterial, insbesondere das LENR. oder LENR+-Material, Micro- und/oder Nanopartikel aus einem Metall aufweist, das ausgewählt ist aus einer Gruppe, die Transitionsmetalle der Periode 4 und kleiner zum Beispiel Ni, Ti enthält. Diese Partikel können mit anderen Elementen der Halbmetalle der Gruppe 5 und höher oder der Transitionsmetalle der Periode 4 oder kleiner versehen werden. Zudem kann eine Nano- oder Microstruktur verwendet werden, welche aus Transitionsmetallen der Gruppe 5 und höher besteht. Für das hier nicht weiter interessierende Herstellungsverfahren werden Oberflächen-, Fehlstellen- und Kavitäten- promotende Verfahren bevorzugt.werden. Für genauere Angaben wird auf die Literaturstellen [1] bis [9] verwiesen..

Es ist bevorzugt, dass die Wärmeübertragungseinrichtung ein Rohrsystem zum Abtransportieren von Wärme aus dem Reaktionsraum mittels eines Wärmetransportfluids aufweist.

Es ist bevorzugt, dass die Wärmeübertragungseinrichtung dazu ausgebildet ist, mittels eines Wärmetransportfluids den Reaktionsraum auf eine Betriebstemperatur für den nuklearen Prozess, wie insbesondere LENR-Prozess, aufzuheizen.

Besonders bevorzugt wird die Wärmeübertragungseinrichtung bei einer Startprozedur zum Aufheizen mittels des Wärmetransportfluids und in Betrieb zum Abtransport der Wärme eingesetzt.

Es ist bevorzugt, dass ein wärmeleitendes Gehäuse den Reaktionsraum einschließt.

Es ist bevorzugt, dass das wärmeleitende Gehäuse den Reaktionsraum und in diesen ragende oder diesen durchgreifende Rohre oder Leitungen der Wärmeübertragungseinrichtung einschließt.

Es ist bevorzugt, dass eine thermoelektrische Schicht an den Reaktionsraum anschließend vorgesehen ist, um aus der Wärme des Reaktionsraumes eine elektrische Energie zu erzeugen.

Es ist bevorzugt, dass die thermoelektrische Schicht an dem Gehäuse oder um das Gehäuse herum angeordnet ist und dazu ausgebildet ist, elektrische Energie aus Wärme zu erzeugen, wenn die exotherme Reaktion in Betrieb ist.

Es ist bevorzugt, dass die Steuerung durch die thermoelektrische Schicht energieversorgt wird, um bei Erreichen einer vorbestimmten Betriebstemperatur die Felderzeugungseinrichtung zum Aktivieren und/oder Aufrechterhalten der exothermen Funktion anzusteuern.

Insbesondere liefert die thermoelektrische Schicht nur ab einer bestimmten Temperatur genügend Energie, die es der Steuerung ermöglicht, die Felderzeugungseinrichtung zum Aktivieren und/oder Aufrechterhaltung der exothermen Funktion anzusteuern. Wird aufgrund einer geringeren Temperatur weniger Energie erzeugt, wird demnach das elektrische Feld nicht erzeugt.

Es ist bevorzugt, dass Leitungen oder Rohre der Wärmetransporteinrichtung gleichzeitig als Elektroden oder Pole der Felderzeugungseinrichtung ausgebildet sind.

Gemäß einem weiteren Aspekt schafft die Erfindung ein Energieerzeugungsverfahren zur Erzeugung von Wärmeenergie durch eine exotherme Reaktion in Form eines nuklearen metallgitterunterstützten Wasserstoffprozesses, umfassend:
a) Beladen eines Reaktionsraums mit Reaktionsmaterial einschließlich Micro- und/oder Nanopartikel zur Bereitstellung eines Metallgitters und Wasserstoff,
b) Aufwärmen des Reaktionsraums auf eine Betriebstemperatur oberhalb einer für vorbestimmten kritischen Temperatur,
c) Erzeugen eines Feldes zum Aktivieren und Aufrechterhalten der exothermen Reaktion mittels einer durch eine Steuerung gesteuerten Felderzeugungseinrichtung (18) in Abhängigkeit von einer Temperatur in dem Reaktionsraum;
d) thermoelektrisches Umwandeln von Wärme des Reaktionsraums in elektrische Energie, um ausschließlich mit dieser thermoelektrisch umgewandelten elektrischen Energie die Steuerung umittelbar und/oder ohne Energiepufferung zu betreiben oder zu versorgen und
e) Abführen der durch die exotherme Reaktion erzeugten Überschusswärme zur Wärmeenergienutzung.

Vorzugsweise schafft die Erfindung ein Energieerzeugungsverfahren zur Erzeugung von Wärmeenergie durch eine exotherme Reaktion in Form einer LENR durch Nutzung eines metallgitterunterstützten Wasserstoffprozesses, umfassend:
a) Beladen eines Reaktionsraums mit LENR-Material einschließlich Micro- und/oder Nanopartikel zur Bereitstellung eines Metallgitters und Wasserstoff,
b) Aufwärmen des Reaktionsraum auf eine Betriebstemperatur für LENR oberhalb einer für LENR kritischen Temperatur,
c) Erzeugen eines Feldes zum Aktivieren und Aufrechterhalten der exothermen Reaktion mittels einer durch eine Steuerung gesteuerten Felderzeugungseinrichtung in Abhängigkeit von einer Temperatur in dem Reaktionsraum;
d) thermoelektrisches Umwandeln von Wärme des Reaktionsraums in elektrische Energie, um ausschließlich mit dieser thermoelektrisch umgewandelten elektrischen Energie die Steuerung zu betreiben oder zu versorgen und
e) Abführen der durch die exotherme Reakion erzeugten Überschusswärme zur Wärmeenergienutzung.

Vorzugsweise umfasst das Verfahren weiter: Ansteuern der Felderzeugungseinrichtung zum Erzeugen des Feldes nur in dem Fall, in dem ein Energieparameter, wie insbesondere eine Spannung oder eine Stromstärke, der in Schritt d) gelieferten elektrischen Energie über einem vorbestimmten Schwellwert liegt und Beenden der Erzeugen des Feldes, wenn der Energieparameter unter einem vorbestimmten Schwellwert liegt.

Es ist bevorzugt, dass die Felderzeugungseinrichtung oder die die Felderzeugungseinrichtung ansteuernde Steuerung nur dann mit ausreichend Energie zum Erzeugen des Feldes versorgt wird, wenn die Temperatur in dem Reaktionsraum oberhalb der vorgegebenen kritischen Temperatur liegt.

Die erfindungsgemäße Energieerzeugungsvorrichtung und das erfindungsgemäße Energieerzeugungsverfahren schaffen eine Vorrichtung und ein Verfahren zur Energieerzeugung, die umweltfreundlich und nachhaltig sind, lange Zeit ohne Nachladen betrieben werden können und außerdem überaus kompakt sind. Weiter werden durch die Maßnahmen der Erfindung oder deren vorteilhaften Ausgestaltungen Energieerzeugungsvorrichtungen geschaffen, die selbsterhaltend, zuverlässig und sicher betrieben werden können. Demnach können diese Systeme in Fahrzeugen betrieben werden und sind insbesondere zur Verwendung auf dem Transportsektor geeignet und vorgesehen. Insbesondere können diese Systeme auch in Fahrzeugen verwendet werden, die eine autarke und Vibrationen unterworfene Umgebung vorsehen.

Bei der Vorrichtung und dem Verfahren werden vorzugsweise LENR-Prozesse verwendet, die grundsätzlich bekannt sind. Insbesondere werden LENR-Materialien verwendet, wie sie in der WO 2009/125444 A1, der EP 2 368 252 B1 und der WO 2013/076378 A2 vom Grundsatz her beschrieben sind.

Vorzugsweise werden speziell entworfene Micro- und/oder Nanopartikel in dem Material verwendet. In einer besonders bevorzugten Ausgestaltung werden die Micro- und/oder Nanopartikel speziell beschichtet, insbesondere mit einer Poloxamerbeschichtung (PF68), wie die Beschichtung in [2] beschrieben ist. Darin werden vorzugsweise Kavitäten mit einem Verfahren erzeugt, wie es in der [3] beschrieben ist.

In einer bevorzugten Ausgestaltung umfasst die Energieerzeugungsvorrichtung einen Behälter einschließlich einer Struktur für ein reaktives Material, eine Einrichtung zum Einführen eines elektromagnetischen Feldes, einen Mechanismus für eine Wärmeübertragung und eine Steuerlogik bzw. Regellogik.

Bei einem verwendbaren metallgitterunterstützten Prozess wird insbesondere Wasserstoff zu Heliumgas umgewandelt, wobei eine große Menge von nutzbarer Wärme freigesetzt wird. Der Prozess findet bei einer Betriebstemperatur statt, die - im Gegensatz zu den notwendigen Temperaturen für Plasma-Fusionsprozesse, wie sie z.B. in der Sonne ablaufen - gut in industriell herstellbaren Reaktoren handelbar sind. Hierzu wird ein geeignetes Substrat aus Nickel oder einem anderen hierzu geeigneten Metall mit einer korrekten internen Geometrie verwendet, wobei sich Wasserstoffpartikel in Kavitäten in dem Metallgitter anlagern. Durch ein gepulstes elektromagnetisches Feld - oder durch andere entsprechende Felder - werden Stresszonen in dem Metall erzeugt und die aufgewandte Energie wird in sehr kleinen Räumen konzentriert.

Z.B. werden Materialien und Reaktionen eingesetzt, wie sie in der WO 2013/076378 A2 und/oder der WO 2009/125444 A1 beschrieben sind. Aus [4] und [5] lassen sich weitere Materialien mit hochdichtem Wasserstoff in Metallgittern entnehmen, die zu exothermen Reaktionen angeregt werden können. Auch diese Materialien können als Reaktionsmaterial eingesetzt werden.

In der WO 01/29844 A1 wird "kalte Fusion" (cold fusion) verwiesen. Unter kalter Fusion wird in der Literatur ein Mechanismus auf Basis von Palladium und Deuterium vorgeschlagen, wobei dieser Mechanismus nicht hinreichend erklärt wird. Auch wenn in einigen Aufsätzen manchmal der Ni-H Mechanismus vorgestellt wird und unter dem Begriff "kalte Fusion" diskutiert wird, wird normalerweise darauf hingewiesen, dass bei Ni-H andere Funktionsprinzipien als bei Pd-D tragen. Zur klaren Abgrenzung wird hier der Begriff für "kalte Fusion" an die ursprünglich verwendeten Materialfunktionskreis (Pa-D) geknüpft.

Die Erläuterung oder Ausführung des Prozesses bevorzugt mehrere Ebenen oder auch Verständnis-Modelle, einmal die Quantenkondensat-Ebene, das andere Mal die Ebene der Mehrkörperreaktionen. Bei anderen Ausführungen der Energieerzeugungsvorrichtung wird ein nuklearer Prozess eingesetzt, bei denen es sich nicht um einen klassische "cold fusion"-Prozess handelt. Die hier bevorzugten Methoden basieren in einer ersten geeigneten Art von Prozessen, siehe [4] und [5], auf ultradichter Materie (dem oben genannten Quantenkondensat), welche auch ohne zusätzliches Heizen des aktiven Materials eine Kompression von Wasserstoff im Bereich der Coulomb Barriere zulässt. In der zweiten Ebene kann gesagt werden, dass aufgrund katalytischer Reaktionen die Reaktionswahrscheinlichkeiten durch Mehrkörperprozesse noch erheblich gesteigert werden, auch ohne das Model eines Quantenkondensates zu benötigten. Diese Art von Prozessen wird in. [6] und [7] beschrieben (nuclear reaction probability increased by charged particle with electron host or charged particle host). Die Modellebenen zwischen Kondensat und Mehrkörperprozess unterscheiden sich wie eine Erklärung auf Wellen- und eine Erklärung auf Teilchenebene, dabei ergänzen sich beide.

Die erste Art von Modell-Prozessen wird durch massive Boson-Bildung unterstützt, welche dann eine entsprechend hinreichende Partikeldichte für eine nukleare Reaktion zulässt. Dies unterscheidet sich zur geläufigen Fermionischen Materie die dem Pauli's Ausschließungsprinzip genügt und damit nicht dicht kondensieren kann (eben wie ein Bosonen-Kondensat). Wenn auch in diesem Zusammenhang von Fusion gesprochen wird, so muss weiterhin davon ausgegangen werden, dass es sich nicht um eine Fusion im klassischen Sinne handeln muss. Es kann auch eine Fusion auf Elektroschwacher Ebene stattfinden, welche die Spinordnung nutzt, um in einen energetisch mehr gebundenen Zustand zu kommen, um so Energie freizusetzen.

Das Reaktionsmaterial sowie die Prozessparameter werden derart ausgewählt, dass Konfigurationen vermieden werden, in denen schädliche elektromagnetische oder baryonische Strahlung, wie z.B. Neutronenstrahlungen, vermieden werden. Hierzu können bei Anwendung einer der erfindungsgemäßen Lehren die Prozesse erst bei Temperaturen gestartet werden, bei denen derartige Strahlungen vermieden oder zumindest verringert sind. Wird ein solcher sicherer Temperaturbereich verlassen (d.h. bei Abkühlung hin auf zu kalte Temperaturen) wird automatisch die Energiezufuhr zum Erzeugen der Prozesse gestoppt und die Prozesse werden somit gestoppt.

Die Erfinder gehen davon aus, dass bei derartigen LENR-Prozessen der Wasserstoffkern, der insbesondere ein Proton ist, einer nukleidinternen Umstrukturierung auf Niveau der schwachen und starken Wechselwirkung unterworfen wird. Produkte hierzu können He4 sein.

Wie dies bei LENR-Prozessen bereits bekannt ist, werden Resonanzeffekte verwendet, um die elektromagnetischen Felder zu verstärken. Spezielle Effekte treten bei etwa 15 THZ und 11 µm auf. Die Resonanzeffekte werden durch eine Pulsflanke angeregt, die durch ein elektromagnetisches Feld über Elektroden eingeleitet wird.

Der Puls wird durch eine Steuerung oder Steuerlogik erzeugt, die den Zustand der Zelle bzw. des Reaktionsraumes überwacht.

Es wird davon ausgegangen, dass bei fehlerhafter Regelung oder Überwachung und Steuerung der Felder eine gefährliche Strahlung erzeugt werden kann. Eine gefährliche Strahlung kann auftreten, wenn keine kollektive Absorption der elektromagnetischen Strahlung auftritt. Dies ist insbesondere der Fall, wenn sich der Reaktionsraum nicht bei einer geeigneten Betriebstemperatur befindet. Eine Betriebstemperatur ist eine Temperatur über einer für derartige Prozesse, wie LENR-Prozesse, kritischen Temperatur. Üblicherweise liegen insbesondere bei Nikatalysierten Prozessen derartige Betriebstemperaturen bei ca. 500 K oder darüber. Bei Prozessen unter Verwendung von Carbon-Nanotubes liegen typische Betriebstemperaturen bei ca 1000 K. Abhängig vom Material sind auch tiefere Temperaturen vorstellbar, die oberhalb der Debye-Temperatur liegen werden. Wird in dem Reaktionsraum eine Temperatur unterhalb einer derartigen kritischen Temperatur oder Schwellentemperatur erreicht, könnte unerwünschte Strahlung auftreten. Derartige Zustände könnten beispielsweise auftreten bei einer Modifikation durch Personen, bei einer zufälligen Situation oder bei Unfällen oder z.B. bei einem zufälligen Anstieg einer Wärmeabfuhr während des Betriebes. Gemäß einem Aspekt der Erfindung wird eine Energieversorgung für die Steuerung derart ausgebildet, dass die Steuerung dann, wenn der Reaktionsraum sich nicht bei Betriebstemperatur und somit unterhalb einer kritischen Temperatur befindet, nicht mit ausreichender Spannung oder ausreichender Energie versorgt wird und deswegen kein exothermer Prozess durch Trigger-Pulse aktiviert wird. Befindet sich die Zelle bei einer ausreichend hohen Temperatur, ist die Energiezufuhr ausreichend, so dass Trigger-Pulse durch Pulsweitenmodulation erzeugt werden können, die den exothermen Prozess aktivieren.

Vorzugsweise ist die Energieversorgung der Steuerung unterschiedlich zu bisherigen Steuerungen für derartige Prozesse. Insbesondere wird die Steuerung durch die Wärme in dem Reaktionsraum mit Energie versorgt. Die erzeugte Wärme selbst wird durch Abfuhr der Wärme mittels der Wärmetransporteinrichtung genutzt. Die Steuerung wird somit durch eine eigene, von der eigentlichen nutzbaren Wärmeenergie getrennte Energie versorgt.

Vorzugsweise wird die Wärmetransporteinrichtung dazu verwendet, den Reaktionsraum auf Betriebstemperatur aufzuheizen. Erst wenn die Aufheizung mittels dieser gesonderten Wärmequelle betrieben ist, wird aufgrund der Energieversorgung der Steuerung durch die dann erst erzeugte Wärme in dem Reaktionsraum mit ausreichender Energie zur Aktivierung des LENR-Prozesses versorgt. Demnach werden der Betrieb des Reaktors - die Energieversorgung zum Halten der Temperatur und der Elektrolyse - und die Steuerung durch unterschiedliche Energiequellen versorgt. Dadurch wird eine höhere Effizienz bewirkt. Außerdem ist die Steuerung stabiler im Hinblick auf zufällige Leistungsabfälle, so dass sie auch dann, wenn eine externe Energieversorgung aufgrund eines Unfalles oder eines Zufalles ausfallen sollte, aufgrund ihrer eigenen Energieversorgung, die durch die Reaktionswärme aufrecht erhalten wird, weiterarbeiten kann und die Zelle insofern noch steuern kann.

Vorteilhafte Ausgestaltungen der Erfindung schaffen eine Vorrichtung und ein Verfahren zur Energieerzeugung, welche im Transportsektor einsetzbar sind.

Besonders bevorzugt wird eine Lösung geschaffen, die sämtliche Kriterien 1 bis 9 für derartige Quellen exothermaler Energie wie oben erläutert erfüllt.

Durch die Nutzung einer exothermen Reaktion auf Basis einer LENR oder einer LENR+ unter Verwendung von Wasserstoff in einem Metallmaterial bei Temperaturen oberhalb einer kritischen Temperatur und innerhalb eines gepulsten Feldes, um so Energie durch Umwandlung von eingeschlossenen Wasserstoffkernen zu erzeugen, wird eine Energieerzeugungsvorrichtung geschaffen, die alle Merkmale 1 bis 7 der vorteilhaften Kriterien für Energiequellen für den Transportsektor und zusätzlich auch die Merkmale 8 und 9 erfüllt.

Bei einer vorteilhaften Lösung weist die Energieerzeugungsvorrichtung wenigstens eine Zelle oder einen Reaktor auf, die wenigstens eines, mehrere oder alle der folgenden Merkmale i) bis vii) umfasst:
i) Sie enthält ein speziell designtes Nanopartikel-Brennstoffmaterial, das einen LENR+-Prozess katalysiert oder in einem LENR+-Prozess mit Wasserstoff reagiert (das "+" bezeichnet das speziell entworfene Nanomaterial).
ii) Es ist ein Röhrensystem vorgesehen, welches die Hitze mittels eines Reaktionsfluids aus dem Reaktionsprodukt transportiert. Insbesondere ist ein Thermalfluidtransportröhrensystem vorgesehen.
iii) Das Reaktionsfluid wird vorzugsweise ebenfalls verwendet, um die Zelle oder den Reaktorraum auf Betriebstemperatur aufzuheizen. Für LENR-Technologie liegt die Betriebstemperatur ca. oberhalb von 500 K.
iv) Es ist weiter ein thermisch leitendes Gehäuse zum Einkapseln des Röhren- und Brennstoffsystems vorgesehen.
v) Eine thermoelektrische Schicht um das Gehäuse liefert elektrische Energie, wenn die Zelle in Betrieb ist.
vi) Eine elektrische Kompensationseinheit und eine Regelung sind vorgesehen, um den Betriebsmechanismus derart zu steuern, dass der Betrieb stabilisiert ist.
vii) Das Steuersystem wird durch die thermoelektrische Schicht um das Gehäuse mit Energie versorgt. Die elektrische Spannung dieser thermoelektrischen Schicht ist eine monotone Funktion der Wärme in dem Gehäuse. Wenn sich die Zelle nicht bei Betriebstemperatur befindet, ist die elektrische Spannung kleiner als ein kritischer vorbestimmter Wert, und die Steuerung liefert nicht die notwendigen Pulse für den Zellenbetrieb.

Bisher sind zwar bereits LENR-Zellen bekannt, diese arbeiten aber mit dem Risiko von exotherm instabilen Effekten, die zum Ausfall oder zu schädlichen Explosionen oder zu schädlichen Strahlungen führen können. Auch sind pulsierte Systeme denkbar, die aber nicht selbsterhaltend, also nicht autark sind. Ein Energieimpuls wird zum Aufheizen der Betriebstemperatur für die Reaktion verwendet. Bei Betriebstemperatur wird der exotherme Prozess initiiert. Dieser Prozess ist stabil, aber hört nach einer Zeitspanne auf. Demnach ist dieser zweite Typ eines bekannten LENR-Prozesses stabil, aber nicht selbsterhaltend bzw. autark. Er hat einen geringen Wirkungsgrad im Vergleich zu autarken Systemen und braucht daher externe zusätzliche Energie und Steuerung.

Mit der bevorzugten Ausgestaltung der erfindungsgemäßen Vorrichtung und des erfindungsgemäßen Verfahrens wird dagegen eine Zelle geschaffen, die autark ist und gleichzeitig stabil und zusätzlich sicher gegenüber Manipulation hin zu einem Betrieb außerhalb der Betriebstemperatur.

In der bevorzugten Ausgestaltung wird dies insbesondere durch die oben näher genannten Elemente v) bis vii) erreicht.

Bisher hat man erwartet, dass LENR-Zellen ein Vakuum im internen Mechanismus haben muss oder eine nasse Betriebsumgebung. Durch Vakuum oder die nasse Betriebsumgebung können jedoch hohe interne mechanische Stöße auftreten, die eine Belastung aufgrund mechanischer Lasten verursachen, die unter Umgebungsbelastungen, wie z.B. Schwingungen oder Vibrationen, auftreten können. Aufgrund dieser Eigenschaft bisher konzipierter LENR-Zellen ist die Zuverlässigkeit bei einem Betrieb in einem Transportmittel oder auf dem Transportsektor verschlechtert.

Eine vorteilhafte Ausgestaltung der Erfindung sieht dagegen eine trockene Umgebung - trockener Reaktionsraum - vor, in der ein Druck etwa auf Atmosphärenniveau herrscht.

Vorzugsweise ist jede Zellenkerneinheit in einem sehr kompakten Design ausgeführt. Hierdurch kann eine hohe Zuverlässigkeit erwartet werden, da nur geringe interne Belastungen unter Betriebsumgebungen auftreten. Kompaktes Energiezellendesign ist für andere konventionelle Energieumwandlungssysteme bereits Stand der Technik; aber die Kombination einer LENR-Zelle mit einem kompakten belastungsfreien mechanischen Design ist nicht bekannt.

Aufgrund der Eigenschaften des autarken und gleichzeitig stabilen Systems und der kompakten Konstruktion wird zum ersten Mal eine LENR-Technologie derart ausgebildet, dass sie auch in Systemen mit ausgeprägten mechanischen Schwingungen eingesetzt werden können, wie sie oft auf dem Transportsektor auftreten können.

In der Populärliteratur zu LENR wird oft auch eine sog. "kalte Fusion" und der Pons-Fleischmann-Effekt erwähnt. Dieser Pons-Fleischmann-Effekt hat jedoch nur im Entfernten etwas mit der hier vorgestellten Technologie zu tun, insbesondere da die Physik hinter diesem Pons-Fleischmann-Effekt nur schwer verstanden ist. Trotzdem sind die Ergebnisse zu diesen Experimenten zu Pons und Fleischmann heute reproduzierbar, siehe die Vorlesungen und Veröffentlichungen von Prof. Hagelstein von MIT und M. Swartz von JetEnergy in Bezug auf die Experimente FUSOR, NANOR. Auch werden in Frankreich viele Referenzen durch Herrn Naudin gegeben. Die Experimente beziehen sich häufig auf eine nasse Zelle und einen Betrieb mit Palladium, wobei ein Gleichstrom oder in Sonderfällen auch Wechselstrom benutzt wird. Viele erste Experimente zu diesem Effekt lagen an der Nachweisgrenze.

Bei der hier vorgestellten Technologie wird in bevorzugter Ausgestaltung eine trockene Zelle verwendet, also ein Reaktionsraum mit nicht-flüssiger Befüllung. Eventuell kann ein Gasgemisch aus Wasserstoff und/oder Kaliumverbindung zum Einsatz kommen. Die Energie zur Anregung in diesen Systemen wird gepulst zugeführt. Damit können spezielle Systemzugstände - Rydberg-Atome - angeregt werden. Die Rydberg-Atome verhalten sich elektromagnetisch für einen kurzen Zeitpunkt wie ein neutrales Nukleon. Damit ist eine Fusion mit einem elektrisch geladenen Kern möglich. Dieses Prinzip wird bereits von einer Reihe von Firmen verwirklicht - siehe Leonardo Corporation, Defkalion Green Technology, Brillouin Energy, Bolotov.

Es sind bereits früher thermoelektrische Schichten zur Nutzung von erwarteter Reaktionswärme und zum Umwandeln der Reaktionswärme in elektrische Energie vorgeschlagen worden. Jedoch wird bei der bevorzugten Ausgestaltung der Erfindung nur die Steuerungs- und Überwachungselektronik mit der aus der Wärme über thermoelektrische Umwandlung erzeugten elektrischen Energie versorgt. Die Nutzwärme wird durch die Wärmeübertragungseinheit - insbesondere mittels eines Fluids - aus dem Reaktionsraum geführt.

Bisher vorgestellte Konzepte, wo die Reaktionswärme zur unmittelbaren Herstellung elektrischer Energie mittels thermoelektrischer Schichten vorgeschlagen wird, werden eher als unmachbar eingeschätzt. Dies lässt sich aus einer ganz einfachen Wirkungsgradbetrachtung ermitteln.

Ein wesentlicher Unterschied gegenüber früheren, auf Fusionsprinzipien abstellenden Patentdokumenten, die thermoelektrische Generatoren nutzen, ist, dass entsprechend durch Thermogeneratoren umgewandelte elektrische Energie bei der Ausgestaltung der Erfindung lediglich zur Energieversorgung - vorzugsweise auch zur ausschließlichen Energieversorgung - einer Steuerung und/oder einer Regelung und/oder einer Überwachungselektronik eingesetzt wird.

Beispiele solcher früherer Dokumente finden sich in der EP 0 724 269 A1, der EP 0 563 381 A1, der EP 0 477 018 A1, der EP 1 345 238 A2 und der EP 0 698 893 A2.

Selbstverständlich sind thermoelektrische Generatoren gut bekannt und es ist auch bekannt, dass derartige thermoelektrische Generatoren eingesetzt werden können, um elektrische Energie zu erzeugen, sobald man Wärme hat.

Jedoch wird bei der besonders bevorzugten Ausgestaltung der Erfindung ein thermoelektrischer Generator nicht zur Erzeugung der Nutzenergie eingesetzt, sondern eine thermoelektrische Energie zur Versorgung der Steuerung des Reaktors selbst verwendet, wobei die abgegebene Spannung gleichzeitig als Regelgröße angesehen werden kann.

Damit wird ein stabilerer Betrieb möglich, zum einen in der Anlaufphase, da direkt die Energie aus dem Prozess für die Steuerung verwendet wird. Damit wird die Zelle erst aktiviert, wenn sie im Betriebszustand ist. Zum anderen wird ein stabilerer Betrieb in der Abschaltphase möglich. Sollte eine externe, unterstützende Energiequelle für die Steuerung und die einzubringende Energie, welche für den Betrieb im anderen Fall nötig wäre, ausfallen, wäre eine Zelle, deren Steuerung durch die externe Energie versorgt wird, in einem undefinierten Zustand. Bei der hier vorgeschlagenen Lösung ist dies nicht der Fall, da die Steuerung autark durch den thermoelektrischen Generator mit Energie versorgt wird, solange Wärme vorhanden ist.

Die Trennung der Steuerung von der restlichen einzubringenden Leistung erlaubt hier eine weitergehende Kontrolle des Reaktors, ähnlich wie sie auch durch die Schaffung einer weiteren Redundanz möglich wäre. Die Restenergie aus Wärmespeicherung und bei diesem Prinzip "Wärme auch nach der Beendigung des Prozesses" ("heat after death") ist ja vorhanden und steht auch im Notfall zur Verfügung. Damit ist ein stabileres System zum kontrollierten Herunterfahren möglich, als wenn dies über eine externe Stromquelle realisiert würde.

Vorzugsweise ist die Energieerzeugungsvorrichtung modular aufgebaut. Dadurch sind Wartung, Stabilität und Inbetriebnahme sehr viel vorteilhafter als bei bekannten Systemen.

Vorzugsweise ist der thermoelektrische Generator nicht in dem Reaktionsraum selbst, sondern auf dessen Oberfläche außerhalb aufgebracht. Dort sind wesentlich niedrigere Temperaturen zu erwarten, die erst einen ordentlichen Betrieb von Halbleiter-basierten thermoelektrischen Generatoren erwarten lassen.

Derzeit bekannte Thermoelemente haben selbst bei aller neuester Entwicklung einen Wirkungsgrad von ca. 10 %. Mit der neuesten LENR+-Technologie können die Faktoren von zugeführter Energie zu abgegebener Energie bei 6 und mehr liegen. Somit lässt sich die abgegebene Energie rein aus Wirkungsgradberechnungen nicht durch die Thermogeneratoren nutzen. Die Thermogeneratoren erzeugen jedoch ausreichend Energie, um die entsprechende Elektronik zur Steuerung oder Regelung mit Strom zu versorgen.

LENR und LENR+ sind nicht mit "kalter Fusion" gleichzusetzen, sondern haben weitergehende Erklärungsprinzipien, die auf Plasmon-Resonanzen beruhen; insbesondere finden Mehrkörperdynamik Prozesse zwischen katalysierenden Nucleon und Reaktionspartnern statt, die eine Beteiligung der schwachen Wechselwirkung an den Kernprozessen vermuten lassen..

Die LENR+-Systeme werden vorzugsweise so geführt, dass man eine kontrollierte aktive Umgebung herbeiführt, z.B. durch kurzzeitige Wärmezufuhr, und damit die Reaktion auslöst oder vorbereitet. Durch gezielte Pulsbreitenmodulation (PWM) wird der Prozess aktiviert und deaktiviert. Es wird erwartet, dass die Flanken der Pulsform im hochfrequenten Bereich Resonanzen des Wasserstoff-Systems oder eines künstlichen Atoms, gebildet zum Beispiel aus Fehlstellen, und Plasmonen, anregen, und daher die Reaktion begünstigen. Das System ist dann so eingestellt, dass der Prozess von selbst abstirbt, sobald keine weitere Anregung stattfindet..

Vorzugsweise handelt es sich bei der Energieerzeugungsvorrichtung um ein trockenes System, das auf Thermogeneratoren beruhende Mechanismen zur Regelung betreibt.

Generell sind dagegen in früheren Patentdokumenten, die sich auf den Pons-Fleischmann-Effekt beziehen, Wasserstoff-Isotope genannt, um auch Deuterium und Tritium einzubinden. Unter Wasserstoff-Isotop fällt auch das Protium - also der einfache Wasserstoff. Es ist jedoch weitgehend bekannt, dass die nach dem Pons-Fleischmann-Prinzip arbeitenden Geräte mit normalem Wasserstoff aus Wasser (Protium) nicht betrieben werden können.

Bei der bevorzugten Ausgestaltung der Erfindung wird jedoch reiner aus Wasser erhaltener Wasserstoff, d.h. mit natürlichem Isotopengemisch und kein in der Massenzahl erhöhter Wasserstoff, verwendet. Dies ist wesentlich günstiger.

Zusammenfassend wird zum Bereitstellen einer umweltfreundlichen, für den Transportsektor geeignete Wärmeenergiequelle durch die Erfindung eine Energieerzeugungsvorrichtung zur Erzeugung von Wärmeenergie durch eine exotherme Reaktion in Form eines nuklearen metallgitterunterstützten Wasserstoffprozesses geschaffen, umfassend:
einen Reaktionsbehälter mit einem Reaktionsmaterial (45) zur Durchführung der exothermen Reaktion enthaltenden Reaktionsraum (16),
eine Felderzeugungseinrichtung (18) zur Erzeugung eines Feldes in dem Reaktionsraum (16) zum Aktivieren und/oder Aufrechterhalten der exothermen Reaktion, eine Wärmeübertragungseinrichtung (20) zur Übertragung von Wärme in den und/oder aus dem Reaktionsraum (16), und eine Steuerung (26), die dazu ausgebildet ist, die Felderzeugungseinrichtung (18) in Abhängigkeit von der Temperatur in dem Reaktionsraum zur Stabilisierung der exothermen Reaktion zu steuern oder zu regeln, wobei die Steuerung (26) zur alleinigen Energieversorgung derart an einen thermoelektrischen Generator zur Umwandlung von Wärme aus dem Reaktionsraum in elektrische Energie angeschlossen ist, dass nur dann genügend Energie zur Erzeugung des Feldes zur Verfügung steht, wenn die Temperatur oberhalb eines kritischen Bereichs, z.B. 500 K liegt.

Es wird ein System zur Wärmeerzeugung durch nukleare Prozesse vorgeschlagen, welche nicht Fusions- oder Spaltungsprozesse sein müssen. Dazu wird ein Gerät vorgeschlagen, welches aber dazu ausgerichtet ist, die Reaktion zu stoppen oder entsprechend zu modifizieren, wenn die Betriebstemperatur nicht gehalten werden kann und es dadurch zu schädlicher Strahlung aus Fusions- oder Spaltungsprozessen kommen sollte. Dazu wird eine Reglung vorgesehen.

Die Erfindung beruht auf der Erkenntnis, dass solche Prozesse auch im kalten Gerätezustand ablaufen können, siehe [4], [5]. Dort können aber nach Erkenntnissen der Erfinder schädliche Strahlung entstehen, was durch die Erfindung vermieden wird. Die im Stand der Technik geführte Motivation für Steuerung anhand der Betriebstemperatur sind im Gegensatz dahin gerichtet, den Betrieb aufrechtzuerhalten und zu optimieren hinsichtlich des Wirkungsgrades.

Eine bevorzugte praktische Realisierung der Vorrichtung nutzt eine Kombination einer Wärmetauschertechnologie bzw. Wärmetauscherkonstruktion und des entsprechenden Kontrollmechanismus . Eine Anleitung zum Herstellen von Reaktionsmaterial findet sich z.B. in dem Patent US8227020 B1. Jeder Fachmann kann damit ein geeignetes Reaktionsmaterial herstellen.

Es wird eine Technologie vor zur Wärmeerzeugung vorgeschlagen, wobei auf ein Design aus eines Wärmtauscheraufbaus zurückgegriffen wird.

Weiterhin wird ein Kontrollmechanismus vorgeschlagen, um den Nicht-Betrieb bei niederen Temperaturen sicherzustellen.

Ausführungsbeispiele der Erfindung werden nachfolgenden anhand der beigefügten Zeichnungen näher erläutert. Darin zeigen:
- Fig. 1: eine schematische Darstellung einer Energieerzeugungsvorrichtung mit einer Zelle zur Energieerzeugung, wobei der mechanische Aufbau der Zelle in einer teilweise geschnittenen Darstellung gezeigt ist;
- Fig. 2: eine Blockdarstellung des elektrischen Aufbaus der Energieerzeugungsvorrichtung.

In den Figuren ist der mechanische und der elektrische Aufbau einer Ausführungsform einer Energieerzeugungsvorrichtung 10, die wenigstens eine Zelle 12 zur Energieerzeugung aufweist, gezeigt.

Die Energieerzeugungsvorrichtung 12 ist zur Erzeugung von Wärmeenergie durch eine exotherme Reaktion in Form einer LENR unter Nutzung eines metallgitterunterstützten Wasserstoffprozesses ausgebildet. Die Zelle 12 weist wenigstens einen Reaktionsbehälter 14 auf, in dem reaktives LENR-Material in einem Reaktionsraum 16 enthalten ist.

Weiter ist eine Felderzeugungseinrichtung 18 vorgesehen, die in dem Reaktionsraum 16 ein Feld erzeugt, um die LENR zu aktivieren und/oder aufrecht zu erhalten.

Insbesondere ist die Felderzeugungseinrichtung 18 zum Erzeugen eines elektromagnetischen Feldes ausgebildet. Insbesondere lässt sich damit ein gepulstes elektromagnetisches Feld innerhalb des Reaktionsraums 16 erzeugen, um, wie dies grundsätzlich bekannt ist, eine LENR-Reaktion und mehr insbesondere eine LENR+-Reaktion durchzuführen.

Ferner weist die Zelle 12 eine Wärmeübertragungseinrichtung 20 zur Übertragung von Wärme in dem Reaktionsraum 16 bzw. zum Abführen von Wärme aus dem Reaktionsraum 16 auf. Die Wärmeübertragungseinrichtung 20 weist ein Rohrsystem 22 mit mehreren, in den Reaktionsraum 16 geführten bzw. den Reaktionsraum 16 durchlaufenden Rohre 24 auf.

Weiter weist die Energieerzeugungsvorrichtung 10 eine Steuerung 26 auf, die dazu ausgebildet ist, die Felderzeugungseinrichtung 18 zur Stabilisierung der exothermen Reaktion zu steuern oder zu regeln. Hierzu wird in oder an dem Reaktionsraum 16 wenigstens ein Betriebsparameter mittels einer Betriebsparametererfassungseinrichtung 28 erfasst, wobei die Steuerung 26 dazu ausgebildet ist, die Steuerung oder Regelung der Zelle 12 in Abhängigkeit von dem erfassten Betriebsparameter durchzuführen.

Die Betriebsparametererfassungseinrichtung 28 ist dazu ausgebildet, eine Temperatur in dem Reaktionsraum 16 daraufhin zu erfassen, ob sie innerhalb eines vorbestimmten Temperaturbereiches, der eine Betriebstemperatur für die LENR oder LENR+ angibt, liegt. Die Betriebstemperatur liegt oberhalb eines vorbestimmten kritischen Temperaturwerts für die LENR bzw. LENR+ und typischerweise um oder oberhalb von ca. 500 K. Der eine Betriebstemperatur angebende Temperaturbereich ist derjenige Bereich, in dem eine LENR oder LENR+ ohne Emission schädlicher Strahlung und unter Erzeugung von Wärme (exotherm) abläuft.

Zur alleinigen Energieversorgung der Steuerung 26 ist ein thermoelektrischer Generator 30 vorgesehen, der Wärmeenergie aus dem Reaktionsraum 16 in elektrische Energie umwandelt und damit die Steuerung 26 mit Energie versorgt. Eine von dem thermoelektrischen Generator 30 gelieferte Spannung lässt sich als Maß für die Temperatur in dem Reaktionsraum 16 heranziehen. Liegt die Spannung oberhalb eines vorbestimmten Wertes, kann man darauf schließen, dass die Temperatur in dem Reaktionsraum 16 eine vorbestimmte Betriebstemperatur für die LENR oder LENR+ ist.

Die Steuerung 26 und der thermoelektrische Generator 30 sind derart ausgebildet, dass die Steuerung 26 die Felderzeugungseinrichtung 18 nur dann derart ansteuert, dass diese das aktivierende oder aufrecht erhaltende Feld erzeugt, wenn der thermoelektrische Generator 30 eine Spannung liefert, die anzeigt, dass sich der Reaktionsraum 16 auf Betriebstemperatur befindet.

Demnach bilden die Steuerung 26, der thermoelektrische Generator 30 und die Felderzeugungseinrichtung 18 eine Steueranordnung, mit der sich automatisch eine Anregung bei zu tiefen Temperaturen mit der dabei einhergehenden Gefahr von schädlichen Strahlungen vermeiden lässt.

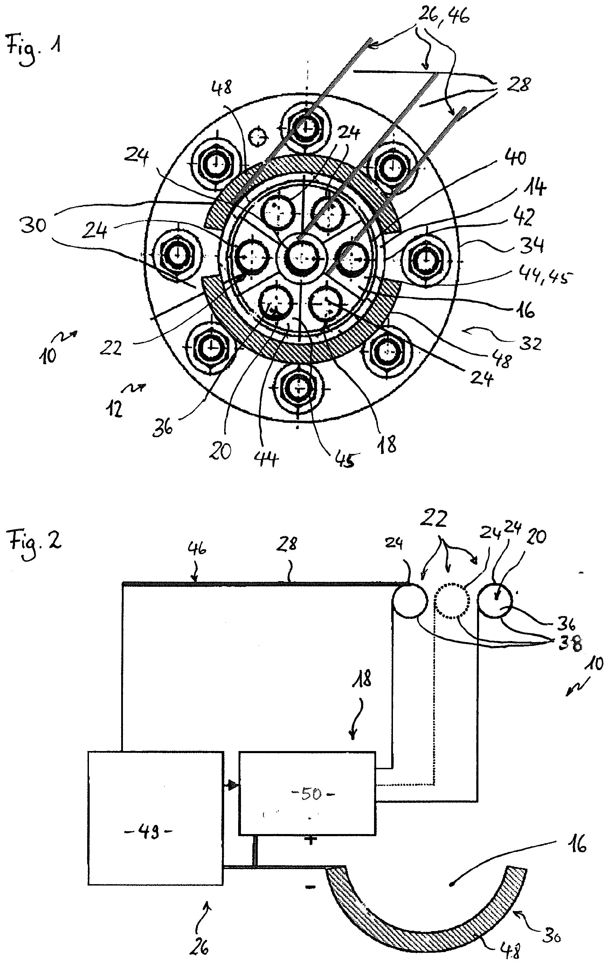

In Fig. 1 ist nur eine einzelne Zelleneinheit 32 der Zelle 12 dargestellt. Für Leistungen größer als 100 W kann die Energieerzeugungsvorrichtung 10 aus mehreren kleineren Zelleneinheiten 32 gebildet werden. Vorzugsweise sind wenigstens fünf derartige Zelleneinheiten 32 vorgesehen. Vorzugsweise wird wenigstens eine der Zelleneinheiten 32 permanent beheizt. Jedenfalls oberhalb von 1 kW sollte die Konstruktion aus mehreren kleineren Zelleneinheiten 32 gewählt werden.

Im Folgenden wird der Aufbau einer einzelnen Zelleneinheit 32 beschrieben.

Der Aufbau der Zelle 12 basiert auf einer Zylinderkonstruktion 34, die den Reaktionsprozess und die elektronische Steuerlogik - Steuerung 26 - beinhaltet. Die Zylinderkonstruktion enthält Rohre 24.

In einer Ausführungsform sind die Rohre 24 als Kupferrohre mit Zirkoniumschaumoberfläche ausgebildet.

Die Rohre 24 dienen zum Leiten eines Kühlfluids 36 und dienen gleichzeitig als Elektrode 38 der Felderzeugungseinrichtung 18 zum Erzeugen eines elektromagnetischen Feldes und zur elektromagnetischen Anregung.

Die Zylinderkonstruktion 34 weist einen den Reaktionsraum 16 umschließenden Mantel 40 auf. Der Mantel 40 bildet einen Teil eines den Reaktionsraum 16 einschließenden Gehäuses 42. Um das Gehäuse 42 sind Infrarot-zu-Elektrizität-Umwandlungsfolien 48 angeordnet, die Teil des thermoelektrischen Generators 30 sind. Die Zelle 12 wird somit durch die Infrarot-zu-Elektrizität-Umwandlungsfolien 48 unterstützt, um einen autarken Betrieb zu schaffen.

Der anhand der Fig. 1 wie zuvor erläuterte mechanische Aufbau der Zelle 12 ist lediglich beispielhaft angegeben.

Der Aufbau kann jede andere Form annehmen, der eine geeignete Anordnung zum Schaffen des Reaktionsprozesses bietet. Der Reaktionsprozess basiert auf Nano-Skalierung und elektromagnetischer Resonanz einschließlich eines Interferenzmusters; daher ist auch ein anderer makroskopischer Aufbau als der Dargestellte möglich.

Als LENR-Material oder LENR+-Material kann jedes einen LENR-Prozess oder LENR+-Prozess hervorrufende Reaktionsmaterial herangezogen werden. Derartige Reaktionen werden durch ein Metallgitter unterstützt. Wasserstoff wird an das Metallgitter gebunden und einer elektromagnetischen Resonanz unterworfen. Es lässt sich eine hohe thermische Energie erzeugen, wie dies grundsätzlich bekannt ist.

Zusätzlich wird hier als Metallgitter ein Gitter aus Nickel in Form eines NanoPulvers mit einer speziellen Beschichtung vorgeschlagen. Der dargestellte Zellenaufbau kann mit einem Nickellegierung-Wasserstoff-System betrieben werden, aber auch ein Palladium-Deuterium-System funktioniert, wenn eine Beschichtung angepasst wird. Es ist auch bekannt, dass andere Gitter geeignete Reaktionen für H oder D bereitstellen, wie z.B. Titan oder Wolfram.

Die Zelle 12 benötigt einen und nur einen Wasserstoff-Ladeprozess vor dem Betrieb. Während des Ladens wird der Wasserstoff ionisiert und tritt als Hydronium in das Metallgitter ein. Nach dem Beladen kann der Betrieb der Zelle über mehrere Monate durchgängig erfolgen.

Die Hauptreaktion wird durch den bekannten LENR-Prozess vorgesehen. Um diesen Prozess zu erhalten, muss die Reaktion angeregt werden. Die Anwendung einer hohen Spannung zwischen den einzelnen Rohren 24 und dem äußeren Gehäuse 42 erzeugt eine hohe elektromagnetische Feldstärke und verursacht lokale Entladungen. Dies wird durch eine Pulsweitenmodulation durchgeführt.

Die Rohre 24 sind in einem Schaum 44 eingebettet, der speziell entworfene Partikel - Nanopartikel -, gefertigt aus Nickel und weiteren Inhaltsstoffen - Beschichtung aus PF68, hergestellt wie in [2] beschrieben, und Zirkonium - enthält. Dieser Schaum mit Nanopartikeln bildet das LENR-Material 45, mit dem der Reaktionsraum 16 befüllt ist.

In diesen so entworfenen Nanopartikeln werden Kavitäten durch einen aus [3] bekannten Prozess erzeugt.

Die Entladung regt die Wasserstoffkerne an, die in die Stellen der Schaumkavitäten eingetreten sind.

Die Stellen der Wasserstoffkerne unterliegen in dieser Konfiguration einer hohen elektromagnetischen Spannung oder Belastung und können damit unterschiedliche exotherme Reaktionskanäle unterlaufen, wie dies durch die LENR-Technologie beschrieben wird, die wiederum im Folgenden beschrieben wird:
Durch den Übergangscharakter der Entladung sind alle Frequenzen, die Wasserstoff in dem Gitter nahe der Kavität anregen können, erreicht. Speziell die Eigenfrequenzen unterhalb des tiefsten Orbitals (sub-low orbit own frequencies) sind für die Kombination von zwei Wasserstoffkernen und den exothermen Prozess verantwortlich. Diese Eigenfrequenzen sind weiterhin gestützt auf das Stefan-Boltzmann-Gesetz für die Strahlung eines schwarzen Körpers gestützt, wobei die Gamov-Frequenz in optischer Resonanz mit der Partikelgröße ist. Um dieses Ziel zu erreichen, sollte eine Schaumkavitätgröße von 7 nm im Schaumerzeugungsverfahren erzeugt werden, jedoch können auch unterschiedliche Kavitätsgrößen funktionieren. Das Ergebnis der Reaktion ist ein Deuterium-Kern, die aus einem elektromagnetisch gekoppelten Zustand der beiden Wasserstoffprotonen nahe der Wand des beschichteten Nickel-Nanopulvers hervorgeht. Weitere Prozesse hin zu He4 treten unter Vorhandensein von Zirkonium auf. Die EM-Anregung erzeugt EM-Oberflächenwellen an den Nanopulverpartikeln. Entlang der Wandgrenzschicht haftet das Hydronium durch chemische Verbundkräfte an. An den Leerstellen in der Gittermatrix, die durch die Schaumprozessingredenzien erzeugt werden, koppeln Elektronen eines Wasserstoff-Paars mit Leerstellen in dem Gitter und erzeugen Quasi-Atome (Quantenpunkte). An diesem Punkt ist das Hydronium polarisiert und kann mit dem Nachbar-Hydronium koppeln, um eine Art "Quasi-Deuterium" zu bilden. Dieser Bindungszustand hat eine geringere Energie als derjenige für das unbeladene Gitter und den freien Wasserstoff. Diese Energie wird durch einen mechanischen Mehrkörperprozess auf das Gitter übertragen. Der Mehrkörperprozess basiert auf elektromagnetischen (EM) Kräften und auf Phononentransfer.

Fig. 1 zeigt einen mechanischen Entwurf der Zelle 12 und der Kühlströmungsrohre. Es sind mehrere Rohre implementiert. Die Rohre 24 sind mit einer angepassten speziellen makroskopischen Form eines Schaums umhüllt, um als geschlossene Sektion in die Zylinderkonstruktion 34 zu passen. Je nachdem, an welche unterschiedlichen Rohre 24 Spannung angelegt wird, können unterschiedliche Entladungssektionen aktiviert werden.

In Fig. 1 ist die Steuerung 26 durch Anschlüsse einer Thermokoppelung 46 angedeutet. Die Energieerzeugungsvorrichtung 10 und deren Zelle 12 wird temperaturgesteuert - Thermokoppelung - und die Leistungsanforderung wird inherent definiert durch die äußere Wärmeanforderung - Strömungsrate oder Strömungsgeschwindigkeit, Strömungskapazität. Eine Anforderung nach einer höheren thermalen Beladung wird angezeigt und überwacht durch eine geringere Temperatur an einer Stelle einer Kühlfluidströmungsquelle an dem Rohrsystem 22 - insbesondere an einem Einlass wenigstens eines Rohrs 24.

Aus diesem Grunde kann die Konstruktion unabhängig von Pumpensystemen für das Kühlfluid gestaltet werden. Ein Pumpensystem - nicht dargestellt - wird als externe Einheit angenommen. Dadurch kann mit ein und derselben Konstruktion eine maximale Anzahl von Anwendungen erzeugt werden.

Jedes z.B. aus Kupfer gefertigte Rohr 24 ist elektrisch isoliert.

Im Folgenden wird unter Bezugnahme auf Fig. 2 die elektrische Konstruktion näher erläutert.

Fig. 2 zeigt ein Blockschaltbild einer Ausführungsform der elektrischen Konstruktion. Aus elektrisch leitfähigem Material - wie z.B. Kupfer - gebildete Rohre 24 sind durch Kreise angedeutet, der thermoelektrische Generator 30 mit den Infrarot-zu-Elektrizitäts-Folien 48 durch die auch in Fig. 1 verwendete Form.

Die Infrarot-zu-Elektrizitäts-Wandlerfolie 48 versorgt die die Steuerung 26 bildende digitale Steuerlogik 49 und eine Einheit 50 für Pulsweitenmodulation und für eine Spannungswandlung allein mit Energie. Die Thermokopplung 46 bildet einen Temperatursensor für die Betriebsparametererfassungseinrichtung 28 zum Erfassen einer Temperatur als Betriebsparameter.

Die Energieerzeugungsvorrichtung 10 und deren Zelle 12 kann für Leistungen von einigen Watt bis hin in den Megawatt-Bereich vorgesehen werden, abhängig von der Pulsweitenmodulation für den Prozess und den Wärmeaustausch.

Die Wärmeübertragungseinrichtung 20 mit Wärmetauschern ist von ihrer Konstruktion her abhängig von den externen Verbrauchern, die mit Leistung versorgt werden sollen. Gemäß deren Anforderungen werden Durchmesser der Rohre 24 und die Strömungsrate festgelegt. Die Konstruktion und deren Größenbemessung - Dimensionierung - kann basierend auf üblichen Regeln für die Konstruktion von Wärmetauschern durch Skalierung erhalten werden.

Die Fig. 1 und 2 zeigen die folienförmigen thermoelektrischen Umwandler - thermoelektrischer Generator 30 - in Form von Infrarot-zu-Elektrizitäts-Folien 48, die rund 5 % Energie, die von der Prozesswärme umgewandelt worden ist, in elektrische Energie umwandeln. Die Auslegung des Wärmeflusses erfolgt derart, dass 5 % in der Infrarot-zu-Elektrizitäts-Folie 48 absorbiert wird. Der verbleibende Teil wird in dem Kühlfluid 36 absorbiert.

Wenn das Kühlfluid 36 keine thermische Leistung liefert, wird die Leerlauftemperatur des Kühlfluids aufrecht erhalten, und überflüssige Wärme wird über das Gehäuse 42 abgetragen.

Bei Betrieb in Luft oder Atmosphäre können am Gehäuse 42 - nicht dargestellt - zusätzliche Rippen oder Oberflächenvergrößerungseinrichtungen vorgesehen werden, um Wärme, die im Leerlauf ohne Wärmeleistung des Kühlfluids erzeugt wird, durch Wärmeabstrahlung und Konvektion abzutransportieren. Bei Betrieb unter Vakuum wird die Oberfläche des Gehäuses 42 durch Rippen so vergrößert, dass sämtliche Wärme durch thermische Strahlung abtransportiert wird, oder es wird ein (zusätzliches) Wärmeröhrensystem (nicht dargestellt) installiert, wenn eine größere Wärmemenge von der Wand des Gehäuses 42 abtransportiert werden muss.

Im Folgenden wird erläutert, wie die Zelle 12 vor einem Betrieb herzurichten ist.

Der Reaktionsbehälter 14 - gebildet durch das Gehäuse 42 - wird, nachdem es mit LENR-Material befüllt worden ist, über einen längeren Zeitraum - z.B. zwei Wochen oder mehr - durch eine Vakuumpumpe evakuiert. Dieser Prozess kann durch geeignete Maßnahmen optimiert werden, z.B. Pulsen oder Erwärmen während des Ladens. Unter "Vakuumpumpe" sind demnach sämtliche Mechanismen zur Evakuierung eingeschlossen, auch fortgeschrittene Verfahren zum Evakuieren, wie z.B. Radiofrequenzsignale, die durch die Zelle 12 während des Ladeprozesses übertragen werden. Nachdem - abhängig von der Evakuierungstechnik - der Reaktionsraum 16 auf einen geeigneten Druck evakuiert worden ist, wird der Reaktionsraum 16 - d.h. der Reaktionsbehälter 14, gebildet durch das Gehäuse 42 - und damit der innere Teil der Zylinderkonstruktion 34, der das LENR-Material enthält, mit Wasserstoff beladen. Insbesondere wird Wasserstoff bis hin zu Umgebungsdruck in die Zylinderkonstruktion 34 eingefüllt. Eine Messung der Beladung kann durch die digitale Steuerungslogik - Steuerung 26 - durchgeführt werden. Z.B. kann eine Messung der Beladung durch Messung des Widerstandes zwischen den Rohren 24 erfolgen. Eine höhere Wasserstoffbeladung reduziert den elektrischen Widerstand. Hierzu wird vor dem Betrieb die Widerstandsmessung kalibriert oder geeicht.

Zum Starten des Prozesses wird der Reaktionsraum 16 durch erwärmtes Kühlfluid 36 auf Betriebstemperatur gebracht; die Wärme liefert über den thermoelektrischen Generator 30 elektrische Energie für die Steuerung 26, die das EM-Feld und die Entladung über PWM startet, um so die LENR+ zu aktivieren.

In anderen Ausführungsformen können andere Reaktionsmaterialien verwendet werden, wie sie aus [4] oder [5] oder [6] bis [9] entnehmbar oder ableitbar sind.

Bei einer Realisierung mit neuen Reaktionsmaterialien wird zunächst durch Versuche die kritische Temperatur ermittelt, unterhalb der es bei der Reaktion - insbesondere LENR oder LENR+ - zu Strahlungen (z.B. Neutronenstrahlung) kommen kann, die es zu vermeiden gilt. Der thermoelektrische Generator 30 bzw. die Steuerung 26 werden dann so eingestellt oder ausgebildet, dass erst oberhalb dieser kritischen Temperatur genügend Energie zur Erzeugung des die Reaktion initiierenden oder aufrechterhaltenden Feldes zur Verfügung steht.

### Bezugszeichenliste:

- 10: Energieerzeugungsvorrichtung
- 12: Zelle
- 14: Reaktionsbehälter
- 16: Reaktionsraum
- 18: Felderzeugungseinrichtung
- 20: Wärmeübertragungseinrichtung
- 22: Rohrsystem
- 24: Rohr
- 26: Steuerung
- 28: Betriebsparametererfassungseinrichtung
- 30: thermoelektrischer Generator
- 32: Zelleneinheit
- 34: Zylinderkonstruktion
- 36: Kühlfluid
- 38: Elektrode
- 40: Mantel
- 42: Gehäuse
- 44: Schaum
- 45: LENR-Material
- 46: Thermokopplung
- 48: Infrarot-zu-Elektrizität-Folie
- 49: digitale Steuerlogik
- 50: Einheit für PWM und Spannungswandlung
- 52: Temperatursensor

## Patentansprüche

1. Energieerzeugungsvorrichtung (10) zur Erzeugung von Wärmeenergie durch eine exotherme Reaktion in Form eines metallgitterunterstützten Wasserstoffprozesses, umfassend:
einen Reaktionsbehälter (14) mit einem Reaktionsmaterial (45) zur Durchführung der exothermen Reaktion enthaltenden Reaktionsraum (16),
eine Felderzeugungseinrichtung (18) zur Erzeugung eines Feldes in dem Reaktionsraum (16) zum Aktivieren und/oder Aufrechterhalten der exothermen Reaktion,
eine Wärmeübertragungseinrichtung (20) zur Übertragung von Wärme in den und/oder aus dem Reaktionsraum (16), und
eine Steuerung (26), die dazu ausgebildet ist, die Felderzeugungseinrichtung (18) abhängig von der Temperatur in dem Reaktionsraum (16) zur Stabilisierung der exothermen Reaktion anzusteuern,
**dadurch gekennzeichnet,**
**dass** zur alleinigen Energieversorgung der Steuerung (26) ein thermoelektrischer Generator (30), der dazu ausgebildet ist, Wärmeenergie aus dem Reaktionsraum (16) in elektrische Energie umzuwandeln, an die Steuerung (26) angeschlossen ist, um die Steuerung (26) mittels der Wärme des Reaktionsraums (16) derart zu betreiben, dass die Steuerung nur dann, wenn die Temperatur in dem Reaktionsraum (16) oberhalb einer vorgegebenen kritischen Temperatur liegt, mit ausreichend Energie versorgt wird, um die Felderzeugungseinrichtung (18) zur Erzeugung des die Reaktion erzeugenden oder aufrechterhaltenden Feldes anzusteuern.

2. Energieerzeugungsvorrichtung nach Anspruch 1,
**gekennzeichnet durch**
eine Betriebsparametererfassungseinrichtung (28) zur Erfassung wenigstens eines Betriebsparameters in dem Reaktionsraum (16), wobei die Steuerung (26) dazu ausgebildet ist, die Wärmeübertragungseinrichtung (20) in Abhängigkeit von dem Betriebsparameter zu steuern,
wobei vorzugsweise die Betriebsparametererfassungseinrichtung (28) zur Erfassung einer Temperatur in dem Reaktionsraum (16) als Betriebsparameter ausgebildet ist und/oder mit einem Temperatursensor (52) zur Erfassung der Temperatur in dem Reaktionsraum (16) versehen ist,
wobei weiter vorzugsweise die Steuerung (26) dazu ausgebildet ist, die elektrische Energie des thermoelektrischen Generators (30) als Regelgröße zu regeln.

3. Energieerzeugungsvorrichtung (10) nach einem der voranstehenden Ansprüche, **gekennzeichnet durch** wenigstens eines der folgenden Merkmale:
- die Felderzeugungseinrichtung (18) ist dazu ausgebildet, ein elektromagnetisches Feld zur Anregung und Aufrechterhaltung der exothermen Reaktion in dem Reaktionsraum (16) zu erzeugen; und/oder
- die Energieerzeugungsvorrichtung (10) ist zur Erzeugung von Wärme durch eine LENR in Form eines metallgitterunterstützten Wasserstoffprozesses ausgebildet, wobei das Reaktionsmaterial ein LENR-Material ist,
wobei vorzugsweise der Reaktionsraum (16) trocken mit LENR-Material (45) enthaltend Micro- und/oder Nanopartikel und Wasserstoff befüllt ist.

4. Energieerzeugungsvorrichtung (10) nach einem der voranstehenden Ansprüche, **gekennzeichnet durch** wenigstens eines der folgenden Merkmale:
- das Reaktionsmaterial weist Micro- und/oder Nanopartikel aus einem Metall auf, das ausgewählt ist aus einer Gruppe, die Ni, Pd, Ti und W enthält, welche Micro- und/oder Nanopartikel mit einer Polymerbeschichtung oder Poloxamer-Beschichtung und mit **durch** Strahlung oder Ionenspurverfahren hergestellten Kavitäten versehen sind; und/oder
- die Wärmeübertragungseinrichtung (20) weist ein Rohrsystem (22) auf zum Abtransportieren von Wärme aus dem Reaktionsraum (16) mittels eines Wärmetransportfluids, wobei die Wärmeübertragungseinrichtung (20) dazu ausgebildet ist, mittels des Wärmetransportfluids den Reaktionsraum (16) auf eine Betriebstemperatur für die exotherme Reaktion aufzuheizen, wobei ein wärmeleitendes Gehäuse (42) den Reaktionsraum (16) und in diesen ragende Rohre (24) des Rohrsystems (22) einschließt, wobei eine thermoelektrische Schicht an dem Gehäuse (42) oder um das Gehäuse (42) herum angeordnet ist und dazu ausgebildet ist, elektrische Energie aus Wärme zu erzeugen, wenn die exotherme Reaktion in Betrieb ist, und wobei die Steuerung (26) **durch** die thermoelektrische Schicht energieversorgt wird, um bei Erreichen einer vorbestimmten Betriebstemperatur die Felderzeugungseinrichtung (18) zum Aktivieren und/oder Aufrechterhalten der exothermen Funktion anzusteuern; und/oder
- Leitungen oder Rohre (24) der Wärmetransporteinrichtung sind gleichzeitig als Elektroden (38) oder Pole der Felderzeugungseinrichtung (18) ausgebildet; und/oder
- die vorgegebene kritische Temperatur liegt im Bereich von 500°K bis 1000°K und beträgt insbesondere 500°K.

5. Steueranordnung für eine Energieerzeugungsvorrichtung (10) nach einem der voranstehenden Ansprüche zur Erzeugung von Wärmeenergie durch eine exotherme Reaktion in Form eines metallgitterunterstützten Wasserstoffprozesses, umfassend:
eine Felderzeugungseinrichtung (18) zur Erzeugung eines Feldes in einem Reaktionsraum (16) zum Aktivieren und/oder Aufrechterhalten der exothermen Reaktion, und
eine Steuerung (26), die dazu ausgebildet ist, die Felderzeugungseinrichtung (18) abhängig von einer Temperatur in dem Reaktionsraum (16) zur Stabilisierung der exothermen Reaktion anzusteuern,
**dadurch gekennzeichnet,**
**dass** zur alleinigen Energieversorgung der Steuerung (26) ein thermoelektrischer Generator (30), der dazu ausgebildet ist, Wärmeenergie aus dem Reaktionsraum (16) in elektrische Energie umzuwandeln, an die Steuerung (26) angeschlossen ist, um die Steuerung (26) mittels der Wärme des Reaktionsraums (16) derart zu betreiben, dass die Steuerung nur bei Vorliegen einer Betriebstemperatur oberhalb einer vorgegebenen kritischen Temperatur mit ausreichend Energie versorgt wird, um die Felderzeugungseinrichtung (18) zur Erzeugung des die Reaktion erzeugenden oder aufrechterhaltenden Feldes anzusteuern.

6. Reaktionsbehälter (14) für eine Energieerzeugungsvorrichtung (10) nach einem der Ansprüche 1 bis 4 zur Erzeugung von Wärmeenergie durch eine exotherme Reaktion in Form eines metallgitterunterstützten Wasserstoffprozesses, wobei der Reaktionsbehälter umfasst:
einen Reaktionsraum (16), der mit einem Reaktionsmaterial (45) zur Durchführung der exothermen Reaktion befüllbar ist,
einen thermoelektrischen Generator (30) zur Umwandlung von Wärme aus dem Reaktionsraum in elektrische Energie zur Energieversorgung einer Steuerung und eine Wärmeübertragungseinrichtung (20) zur Übertragung von Wärme in den und/oder aus dem Reaktionsraum (16),
**dadurch gekennzeichnet,**
**dass** die Wärmeübertragungseinrichtung (20) ein Rohrsystem (22) mit mehreren, in den Reaktionsraum (16) geführten und/oder den Reaktionsraum (16) durchlaufenden Rohren (24) für ein Wärmeübertragungsfluid aufweist.

7. Reaktionsbehälter nach Anspruch 6,
**dadurch gekennzeichnet,**
**dass** die Wärmeübertragungseinrichtung (20) dazu ausgebildet ist, mittels des Wärmetransportfluids den Reaktionsraum (16) auf eine Betriebstemperatur für die exotherme Reaktion aufzuheizen.

8. Reaktionsbehälter nach einem der Ansprüche 6 oder 7,
**dadurch gekennzeichnet,**
**dass** ein wärmeleitendes Gehäuse (42) den Reaktionsraum (16) und in diesen ragende Rohre (24) des Rohrsystems (22) einschließt.

9. Reaktionsbehälter nach einem der Ansprüche 6 bis 8,
**dadurch gekennzeichnet,**
**dass** wenigstens einige der Rohre (24) des Wärmeübertragungssystem mit einer thermoelektrischen Schicht versehen sind.

10. Reaktionsbehälter nach einem der Ansprüche 6 bis 9 und nach Anspruch 8, **dadurch gekennzeichnet,**
**dass** eine thermoelektrische Schicht an dem Gehäuse (42) oder um das Gehäuse (42) herum angeordnet ist und dazu ausgebildet ist, elektrische Energie aus Wärme aus dem Reaktionsraum zu erzeugen.

11. Reaktionsbehälter nach einem der Ansprüche 6 bis 10,
**dadurch gekennzeichnet,**
**dass** eine Zylinderkonstruktion (34) mit einer den Reaktionsraum umschließenden Zylindermantelwand vorgesehen ist.

12. Reaktionsbehälter nach Anspruch 11,
**dadurch gekennzeichnet,**
**dass** die Rohre parallel zur Mittelachse der Zylinderkonstruktion durch den Reaktionsraum geführt sind.

13. Reaktionsbehälter nach einem der Ansprüche 6 bis 12,
**dadurch gekennzeichnet,**
**dass** Rohre (24) der Wärmeübertragungseinrichtung gleichzeitig als Elektroden (38) oder Pole einer Felderzeugungseinrichtung (18) zur Erzeugung einer die exotherme Reaktion aktivierenden oder aufrechterhaltenden Feldes ausgebildet sind.

14. Energieerzeugungsverfahren unter Verwendung einer Energieerzeugungsvorrichtung
(10) nach einem der Ansprüche 1 bis 4, einer Steueranordnung nach Anspruch 12 oder eines Reaktionsbehälters (14) nach einem der Ansprüche 5 bis 13 zur Erzeugung von Wärmeenergie durch eine exotherme Reaktion in Form eines metallgitterunterstützten Wasserstoffprozesses, umfassend:
a) Beladen eines Reaktionsraums (16) mit Reaktionsmaterial (45) einschließlich Micro- und/oder Nanopartikel zur Bereitstellung eines Metallgitters und Wasserstoff,
b) Aufwärmen des Reaktionsraums (16) auf eine Betriebstemperatur oberhalb einer für vorbestimmten kritischen Temperatur,
c) Erzeugen eines Feldes zum Aktivieren und Aufrechterhalten der exothermen Reaktion mittels einer durch eine Steuerung (26) gesteuerten Felderzeugungseinrichtung (18) in Abhängigkeit von einer Temperatur in dem Reaktionsraum (16);
d) thermoelektrisches Umwandeln von Wärme des Reaktionsraums (16) in elektrische Energie, um ausschließlich mit dieser thermoelektrisch umgewandelten elektrischen Energie die Steuerung (26) unmittelbar und ohne Energiepufferung zu betreiben oder zu versorgen und
e) Abführen der durch die exotherme Reaktion erzeugten Überschusswärme zur Wärmeenergienutzung.

15. Energieerzeugungsverfahren nach Anspruch 14,
wobei die Schritte c) und d) beinhalten:
Ansteuern der Felderzeugungseinrichtung (18) zum Erzeugen des Feldes nur in dem Fall, in dem ein Energieparameter wie insbesondere eine Spannung oder eine Stromstärke, der in Schritt d) gelieferten elektrischen Energie über einem vorbestimmten Schwellwert liegt und Beenden der Erzeugen des Feldes, wenn der Energieparameter unter einem vorbestimmten Schwellwert liegt,
wobei vorzugsweise die Felderzeugungseinrichtung (18) oder die die Felderzeugungseinrichtung ansteuernde Steuerung (26) nur dann mit ausreichend Energie zum Erzeugen des Feldes versorgt wird, wenn die Temperatur in dem Reaktionsraum (16) oberhalb der vorgegebenen kritischen Temperatur liegt.

## Claims

1. An energy generating apparatus (10) for generating heat energy by an exothermic reaction in the form of a metal lattice supported hydrogen process comprising:
a reaction vessel (14) with a reaction chamber (16) containing reaction material (45) for carrying out the exothermic reaction,
a field generating device (18) for generating a field in the reaction chamber (16) for activating and/or maintaining the exothermic reaction,
a heat transfer device (20) for transferring heat into and/or out of the reaction chamber (16), and
a control (26) which is designed to control the field generating device (18) depending on the temperature in the reaction chamber (16) for stabilizing the exothermic reaction,
**characterized in**
**that** for the sole energy supply of the control (26) a thermoelectric generator (30), which is designed to convert heat energy from the reaction chamber (16) into electrical energy, is connected with the control (26), in order to operate the control (26) by means of the heat of the reaction chamber (16) such that the control is only supplied with sufficient energy, when the temperature in the reaction chamber (16) is above a predetermined critical temperature, in order to control the field generating device (18) for generating the field which generates or maintains the reaction.

2. The energy generating apparatus according to claim 1,
**characterized by**
an operating parameter detecting device (28) for detecting at least one operating parameter in the reaction chamber (16), wherein the control (26) is designed to control the heat transfer device (20) depending on the operating parameter; wherein the operating parameter detecting device (28) for detecting a temperature in the reaction chamber (16) is preferably designed as an operating parameter and/or is provided with a temperature sensor (52) for detecting the temperature in the reaction chamber (16);
wherein further preferably the control (26) is designed to control the electrical energy of the thermoelectric generator (30) as control parameter.

3. The energy generating apparatus (10) according to one of the preceding claims, **characterized by** at least one of the following features:
- the field generating device (18) is designed to generate an electromagnetic field for stimulating and maintaining the exothermic reaction in the reaction chamber (16); and/or
- the energy generating apparatus (10) is designed to generate heat by a LENR in the form of a metal lattice supported hydrogen process, wherein the reaction material is an LENR material, wherein preferably the reaction chamber (16) is dryly filled with LENR material (45) containing micro-particles and/or nanoparticles and hydrogen.

4. The energy generating apparatus (10) according to one of the preceding claims, **characterized by** at least one of the following features:
- the reaction material comprises micro- and/or nanoparticles of a metal, which is selected from a group which comprises Ni, Pd, Ti and W, the micro- and/or nanoparticles being provided with a polymer coating or a poloxamer coating and with cavities which are produced by radiation or an ion track method; and/or
- the heat transfer device (20) has a tube system (22) for removing of heat from the reaction chamber (16) by means of a heat transport fluid, wherein the heat transfer device (20) is designed to heat up the reaction chamber (16) to an operating temperature for the exothermic reaction by means of the heat transport fluid, wherein a heat conducting casing (42) includes the reaction chamber (16) and tubes (24) of the tube system (22) protruding into the reaction chamber (16), wherein a thermoelectric layer is provided at the casing (42) or around the casing (42) and is designed to generate electrical energy from heat when the exothermic reaction is in operation, and wherein the control (26) is energy supplied by the thermoelectric layer, in order to control the field generating device (18) for activating and/or maintaining the exothermic function when a predetermined operating temperature is reached.
- conduits or tubes (24) of the heat transport device are simultaneously designed as electrodes (38) or poles of the field generating device (18); and/or
- the predetermined critical temperature is in the range from 500°K to 1000°K and especially amounts to 500°K.

5. A control assembly for an energy generating apparatus (10) according to one of the preceding claims, for generating heat energy by an exothermic reaction in the form of a metal lattice supported hydrogen process comprising:
a field generating device (18) for generating a field in a reaction chamber (16) for activating and/or maintaining the exothermic reaction, and
a control (26) which is designed to control the field generating device (18) depending on a temperature in the reaction chamber (16) for stabilizing the exothermic reaction,
**characterized in**
**that** for the sole energy supply of the control (26) a thermoelectric generator (30) which is designed to convert heat energy from the reaction chamber (16) into electrical energy, is connected with the control (26) in order to operate the control (26) by means of the heat of the reaction chamber (16) such that only in the case of an operating temperature above a predetermined critical temperature the control is provided with sufficient energy, in order to control the field generating device (18) for generating the field which generates or maintains the reaction.

6. A reaction vessel (14) for an energy generating apparatus (10) according to one of claims 1 to 4 for generating heat energy by an exothermic reaction in the form of a metal lattice supported hydrogen process, wherein the reaction vessel comprises:
a reaction chamber (16) which is fillable with a reaction material (45) for carrying out the exothermic reaction,
a thermoelectric generator (30) for converting heat from the reaction chamber into electrical energy for the energy supply of a control
and a heat transfer device (20) for transferring heat into and/or out of the reaction chamber (16),
**characterized in**
**that** the heat transfer device (20) comprises a tube system (22) with several tubes (24) for a heat transfer fluid which are lead into the reaction chamber (16) and/or which pass through the reaction chamber (16).

7. The reaction vessel according to claim 6,
**characterized in**
**that** the heat transfer device (20) is designed to heat up the reaction chamber (16) to the operating temperature for the exothermic reaction by means of the heat transport fluid.

8. The reaction vessel according to one of claims 6 or 7,
**characterized in**
**that** a heat conducting casing (42) encloses the reaction chamber (16) and tubes (24) of the tube system (22) protruding therein.

9. The reaction vessel according to one of claims 6 to 8,
**characterized in**
**that** at least some of the tubes (24) of the heat transfer system are provided with a thermoelectric layer.

10. The reaction vessel according to one of claims 6 to 9 and according to claim 8,
**characterized in**
**that** a thermoelectric layer is disposed at the casing (42) or around the casing (42) and is designed to generate electrical energy from heat from the reaction chamber.

11. The reaction vessel according to one of claims 6 to 10,
**characterized in**
**that** a cylinder construction (34) with a cylinder sheath wall enclosing the reaction chamber is provided.

12. The reaction vessel according to claim 11,
**characterized in**
**that** the tubes are guided through the reaction chamber in parallel with the middle axis of the cylinder construction.

13. The reaction vessel according to one of claims 6 to 12,
**characterized in**
**that** the tubes (24) of the heat transfer device are simultaneously designed as electrodes (38) or poles of a field generating device (18) for generating a field activating or maintaining the exothermic reaction.

14. An energy generating method using an energy generating apparatus (10) according to one of claims 1 to 4, a control assembly according to claim 12 or a reaction vessel (14) according to one of claims 5 to 13 for generating heat energy by an exothermic reaction in the form of a metal lattice supported hydrogen process comprising:
a) loading a reaction chamber (16) with reaction material (45) including micro- and/or nanoparticles for providing a metal lattice and hydrogen,
b) heating the reaction chamber (16) to an operating temperature above a predetermined critical temperature,
c) generating a field for activating and maintaining the exothermic reaction by means of a field generating device (18), which is controlled by a control (26), depending on a temperature in the reaction chamber (16);
d) converting heat from the reaction chamber (16) thermoelectrically into electrical energy in order to solely operate or supply the control (26) directly and/or without energy buffering with this thermoelectrically converted electrical energy, and
e) discharging the excess heat generated by the exothermic reaction for a heat energy utilization.

15. The energy generating method according to claim 14,
wherein the steps c) and d) include:
driving the field generating device (18) for generating the field only in the case in which an energy parameter, as in particular a voltage or a current strength, of the electrical energy delivered in step d) is above a predetermined threshold value, and terminating the field generation when the energy parameter is below a predetermined threshold value, wherein preferably the field generating device (18) or the control (26) controlling the field generating device (18) is only supplied with sufficient energy for generating the field, if the temperature in the reaction chamber (16) is above the predetermined critical temperature.

## Revendications

1. Dispositif de génération d'énergie (10) pour générer de l'énergie thermique par une réaction exothermique sous la forme d'un processus à hydrogène assisté par une grille métallique, comportant :
un récipient de réaction (14) comportant une chambre de réaction (16) contenant du matériau de réaction (45) pour mettre en oeuvre la réaction exothermique,
un moyen de génération de champ (18) pour générer un champ dans la chambre de réaction (16) en vue d'activer et/ou de maintenir la réaction exothermique,
un moyen de transmission thermique (20) pour transmettre de la chaleur dans et/ou depuis la chambre de réaction (16), et
une unité de commande (26) qui est réalisée pour piloter le moyen de génération de champ (18) en fonction de la température dans la chambre de réaction (16) en vue de stabiliser la réaction exothermique,
**caractérisé en ce que**
pour la seule alimentation en énergie de l'unité de commande (26), un générateur thermoélectrique (30) réalisé pour convertir de l'énergie thermique de la chambre de réaction (16) en énergie électrique est branché à l'unité de commande (26), pour faire fonctionner l'unité de commande (26) au moyen de la chaleur de la chambre de réaction (16) de telle sorte que l'unité de commande n'est alimentée suffisamment en énergie que lorsque la température dans la chambre de réaction (16) est supérieure à une température critique donnée, afin de piloter le moyen de génération de champ (18) pour générer le champ qui génère ou maintient la réaction.

2. Dispositif de génération d'énergie selon la revendication 1,
**caractérisé par**
un moyen de détection de paramètre de fonctionnement (28) pour détecter au moins un paramètre de fonctionnement dans la chambre de réaction (16), l'unité de commande (26) étant réalisée pour commander le moyen de transmission thermique (20) en fonction du paramètre de fonctionnement,
et de préférence le moyen de détection de paramètre de fonctionnement (28) est réalisé pour détecter une température dans la chambre de réaction (16) à titre de paramètre de fonctionnement, et/ou est pourvu d'un capteur de température (52) pour détecter la température dans la chambre de réaction (16),
et de plus l'unité de commande (26) est de préférence réalisée pour réguler l'énergie électrique du générateur thermoélectrique (30) à titre de grandeur de régulation.

3. Dispositif de génération d'énergie (10) selon l'une des revendications précédentes,
**caractérisé par** l'une au moins des caractéristiques suivantes :
- le moyen de génération de champ (18) est réalisé pour générer un champ électromagnétique destiné à exciter et à maintenir la réaction exothermique dans la chambre de réaction (16) ; et/ou
- le dispositif de génération d'énergie (10) est réalisé pour générer de la chaleur par un LENR (low energy nuclear reactions) sous la forme d'un processus à hydrogène assisté par une grille métallique, le matériau de réaction étant un matériau LENR,
et de préférence la chambre de réaction (16) est remplie à sec avec du matériau LENR (45) contenant des microparticules et/ou des nanoparticules et de l'hydrogène.

4. Dispositif de génération d'énergie (10) selon l'une des revendications précédentes,
**caractérisé par** l'une au moins des caractéristiques suivantes :
- le matériau de réaction présente des microparticules et/ou des nanoparticules d'un métal qui est choisi parmi un groupe qui comprend le Ni, Pd, Ti et W, lesdites microparticules et/ou nanoparticules étant pourvues d'un revêtement en polymère ou d'un revêtement en poloxamère et de cavités réalisées par rayonnement ou par un procédé à traces ioniques ; et/ou
- le moyen de transmission thermique (20) comprend un système tubulaire (22) pour évacuer de la chaleur de la chambre de réaction (16) à l'aide d'un fluide caloporteur, le moyen de transmission thermique (20) étant réalisé pour chauffer la chambre de réaction (16) à une température de fonctionnement pour la réaction exothermique à l'aide du fluide caloporteur, dans lequel un boîtier (42) thermiquement conducteur enferme la chambre de réaction (16) et des tubes (24) du système tubulaire (22) qui pénètrent dans celle-ci, et une couche thermoélectrique est agencée sur le boîtier (42) ou autour du boîtier (42) et est réalisée pour générer de l'énergie électrique à partir de la chaleur lorsque la réaction exothermique est en cours, et
l'unité de commande (26) est alimentée en énergie par la couche thermoélectrique pour piloter le moyen de génération de champ (18) en vue d'activer et/ou de maintenir la fonction exothermique lorsqu'une température de fonctionnement prédéterminée est atteinte ; et/ou
- des conduites ou des tubes (24) du moyen de transmission thermique sont réalisés simultanément sous forme d'électrodes (38) ou de pôles du moyen de génération de champ (18) ; et/ou
- la température critique donnée se situe dans la plage de 500 °K à 1000 °K et s'élève en particulier à 500 °K.

5. Agencement de commande pour un dispositif de génération d'énergie (10) selon l'une des revendications précédentes pour générer de l'énergie thermique par une réaction exothermique sous la forme d'un processus à hydrogène assisté par une grille métallique, comportant :
un moyen de génération de champ (18) pour générer un champ dans une chambre de réaction (16) en vue d'activer et/ou de maintenir la réaction exothermique, et
- une unité de commande (26) qui est réalisée pour piloter le moyen de génération de champ (18) en fonction d'une température dans la chambre de réaction (16) en vue de stabiliser la réaction exothermique,
**caractérisé en ce que**
pour la seule alimentation en énergie de l'unité de commande (26), un générateur thermoélectrique (30) réalisé pour convertir de l'énergie thermique de la chambre de réaction (16) en énergie électrique est branché à l'unité de commande (26), pour faire fonctionner l'unité de commande (26) au moyen de la chaleur de la chambre de réaction (16) de telle sorte que l'unité de commande n'est alimentée suffisamment en énergie que lorsqu'il se présente une température de fonctionnement au-dessus d'une température critique donnée, afin de piloter le moyen de génération de champ (18) pour générer le champ qui génère ou maintient la réaction.

6. Récipient de réaction (14) pour un dispositif de génération d'énergie (10) selon l'une des revendications 1 à 4 pour générer de l'énergie thermique par une réaction exothermique sous la forme d'un processus à hydrogène assisté par une grille métallique, le récipient de réaction comportant :
une chambre de réaction (16) susceptible d'être remplie par un matériau de réaction (45) pour mettre en oeuvre la réaction exothermique,
un générateur thermoélectrique (30) destiné à convertir de la chaleur de la chambre de réaction en énergie électrique pour l'alimentation en énergie d'une unité de commande,
et un moyen de transmission thermique (20) pour transmettre de la chaleur dans et/ou depuis la chambre de réaction (16),
**caractérisé en ce que**
le moyen de transmission thermique (20) comprend un système tubulaire (22) comportant plusieurs tubes (24) destinés à un fluide caloporteur et menés dans la chambre de réaction (16) et/ou traversant la chambre de réaction (16).

7. Récipient de réaction selon la revendication 6,
**caractérisé en ce que**
le moyen de transmission thermique (20) est réalisé pour chauffer la chambre de réaction (16) à une température de fonctionnement pour la réaction exothermique, au moyen du fluide caloporteur.

8. Récipient de réaction selon l'une des revendications 6 ou 7,
**caractérisé en ce que**
un boîtier (42) thermiquement conducteur enferme la chambre de réaction (16) et des tubes (24) du système tubulaire (22) qui pénètrent dans celle-ci.

9. Récipient de réaction selon l'une des revendications 6 à 8,
**caractérisé en ce que**
au moins quelques-uns des tubes (24) du système de transmission thermique sont pourvus d'une couche thermoélectrique.

10. Récipient de réaction selon l'une des revendications 6 à 9 et selon la revendication 8,
**caractérisé en ce que**
une couche thermoélectrique est agencée sur le boîtier (42) ou autour du boîtier (42) et est réalisée pour générer de l'énergie électrique à partir de la chaleur de la chambre de réaction.

11. Récipient de réaction selon l'une des revendications 6 à 10, **caractérisé en ce que**
il est prévu une construction cylindrique (34) pourvue d'une paroi enveloppe cylindrique entourant la chambre de réaction.

12. Récipient de réaction selon la revendication 11,
**caractérisé en ce que**
les tubes sont menés parallèlement à l'axe médian de la construction cylindrique à travers la chambre de réaction.

13. Récipient de réaction selon l'une des revendications 6 à 12, **caractérisé en ce que**
des tubes (24) du moyen de transmission thermique sont réalisés simultanément en tant qu'électrodes (38) ou pôles d'un moyen de génération de champ (18) pour générer un champ qui active ou maintient la réaction exothermique.

14. Procédé de génération d'énergie en utilisant un dispositif de génération d'énergie (10) selon l'une des revendications 1 à 4, un agencement de commande selon la revendication 12 ou un récipient de réaction (14) selon l'une des revendications 5 à 13 pour générer de l'énergie thermique par une réaction exothermique sous la forme d'un processus à hydrogène assisté par une grille métallique, comportant les étapes consistant à :
a) charger une chambre de réaction (16) avec un matériau de réaction (45) incluant des microparticules et/ou des nanoparticules pour mettre à disposition une grille métallique et de l'hydrogène,
b) chauffer la chambre de réaction (16) à une température de fonctionnement au-dessus d'une température critique donnée,
c) générer un champ en vue d'activer et de maintenir la réaction exothermique à l'aide d'un moyen de génération de champ (18) commandé par une unité de commande (26) en fonction d'une température dans la chambre de réaction (16) ;
d) convertir par voie thermoélectrique de la chaleur de la chambre de réaction (16) en énergie électrique, afin de faire fonctionner ou d'alimenter exclusivement en cette énergie électrique convertie par voie thermoélectrique l'unité de commande (26) directement et sans accumulation d'énergie, et
e) évacuer la chaleur excédentaire générée par la réaction exothermique à des fins d'utilisation d'énergie thermique.

15. Procédé de génération d'énergie selon la revendication 14,
dans lequel les étapes c) et d) incluent
le pilotage du moyen de génération de champ (18) pour générer le champ uniquement au cas où un paramètre d'énergie, tel qu'en particulier une tension ou une intensité de courant, de l'énergie électrique fournie dans l'étape d) est supérieur à une valeur seuil prédéterminée, et terminer la génération du champ lorsque le paramètre d'énergie est inférieur à une valeur seuil prédéterminée,
et de préférence alimenter suffisamment en énergie de génération de champ le moyen de génération de champ (18) ou l'unité de commande (26) pilotant le moyen de génération de champ (18), uniquement lorsque la température dans la chambre de réaction (16) est supérieure à la température critique donnée.
